# EUROPÄISCHE PATENTANMELDUNG

(11) **EP 0 896 100 A1**
(43) Veröffentlichungstag der Anmeldung: **10.02.1999**
(21) Anmeldenummer: 97113550.4
(22) Anmeldetag: 06.08.1997
(51) Int. Cl.: E02B 9/08, F03D 3/06, B63H 9/06, A01K 69/06

(54) **Absorbierendes Netz**

(71) Anmelder: Horlemann, Hanspeter, 41238 Mönchengladbach (DE)
(72) Erfinder: Horlemann, Hanspeter, 41238 Mönchengladbach (DE)

(57) **Zusammenfassung**

Ein absorbierendes Netz ist ein von jeder Seite (d1,d2) unterschiedlich durchgängiges Netzgebilde, mit dem auch Objekte, die kleiner als die Durchlässe (51) des Netzgebildes sind, zurückgehalten, absorbiert, werden können, wozu das Netzgebilde mehr als vier Durchlässe (51) aufweist, an denen einseitig in den Bereich der Durchlässe (51) schwenkbare Sperrelemente (15) angebracht sind, die die Durchlässe in einer ersten Lage teilweise abdecken bzw. in einer zweiten Lage freigeben, wobei das antriebslose Schwenken der Sperrelemente (15) durch die Netzstruktur auf eine bestimmte Seite (d2) der Netzstruktur begrenzt wird, wobei das Absorbnetz zur Ausnutzung seiner bedingten Durchlässigkeit unter anderem als Segel oder als Teil von Konstruktionen mit speziellen Verwendungsmöglichkeiten, insbesondere zum Trennen, Sammeln und Umleiten von regellos über schwingend bis strömend sich bewegenen Objekten, wie Teilchen und Körper, Verwendung findet.

## Beschreibung

Die Erfindung bezieht sich auf die Konstruktion einer netzartigen Einrichtung deren eine Seite eine größere Durchlässigkeit als eine gegenüber liegende Seite aufweist, zur Verwendung als Grundbauelement, zum Beispiel zur Ergänzung herkömmlicher Konstruktionen bzw. zur Herstellung und/oder Verwendung in daraus und/oder damit zusammengesetzten Gebilden, die dadurch besondere Verwendungsmöglichkeiten aufweisen, wie im weiteren beschrieben.

Es ist bekannt, daß gitter- bzw. netzartige Gebilde zum Fangen oder Trennen von Lebewesen und sonstigen Objekten, die im wesentlichen größer als die Maschen sind, Verwendung finden, vgl. DIN 60 000, DIN 61 250. Dabei sind diese Gebilde von beiden Seiten für die Objekte gleichermaßen undurchgänglich bzw. für kleine Objekte von beiden Seiten durchlässig. Desweiteren werden derartige, bisher bekannte Gebilde zu Dekorationszwecken, z. B. vor Fenstern, insbesondere als Gardinen, oder zur Bewehrung abschüssiger oder brüchiger Formationen, z. B. abschüssige Hänge im Landschaftsbau, vgl. DE 32 19 911, oder in Stahlbeton, vgl. DIN 1045, 1046, 4225, 4227, verwendet.

Bekannt sind Baustrukturen bestehend aus einer hemisphärischen Wand mit einer Vielzahl von kantig verbundenen gleichschenkeligen dreieckigen ebenen Seiten, wobei die Seiten arrangiert sind, in symmetrischen Mustern von gleichmäßigen Pentagonen, jedes umgeben von gleichmäßigen Hexagone, vgl. US 2 918 992.

Bekannt sind elastische Metall-Maschen-Artikel aus Maschensträngen, vgl. GB 2 108 539, welche aus einer Vielzahl von zwei- oder/und dreidimensional geformten Drähten, die untereinander zu Artikeln vernetzt werden, bestehen. Diese sollen, wenn sie zusammengedrückt werden, den auf diese Gebilde wirkenden Drücke gleichmäßiger im Gebilde verteilen und ein vielseitiges Belastungs- und Bewegungsaufnahmevermögen haben. Es handels sich dabei insbesondere um alternative Dämpfungs- und Isolierungselemente zu Gummi, Kunststoffen, Kork, Filz, Federelementen zur Begegnung von Schwingungen, Erschütterungen und Geräuschen in dynamischen Konstruktionen.

Bekannt ist die als besonders robust und reparaturfreundlich hervorgehobene "Netzstruktur", vgl. DE 32 19 911, insbesondere für die Abwehr von Druckwellen, wie sie z. B. bei Sprengungen oder Explosionen auftreten, bei der die Maschenstruktur, statt wie bei sonstigen Netzen mit Fäden oder Drähten, aus in sich weitgehend starren, speziellen Gliedern bestehen, wobei die Glieder ohne Schweißen zu Netzstrukturen bzw. Vorhängen zusammengesetzt, insbesondere ineinander eingehängt, werden.

Berücksichtigt wurden Lasttragende Dämpfungsvorrichtungen mit Barrierematerial zur Steuerung von Diffusionspumpen, wie Z. B. in DE 40 01 542 A1 beschrieben. Diese Dämpfungsvorrichtungen bestehen aus einem thermoplastischen Film, der kristallines Material enthält, das auf einen relativ hohen Druck aufgeblasen und zur Zeit der Herstellung versiegelt wird. Diese Vorrichtungen sollen den inneren Aufblasdruck während längerer Zeiträume beibehalten, indem eine Form des Diffusionspumpphänomens, eines Selbstaufblasens verwendet wird, bei dem das bewegliche Gas die Gasbestandteile von Luft außer Stickstoff sind. Bei diesen Dämpfungsvorrichtungen können neuartige Materialien für den Film des Hüllmantels verwendet werden, die die Diffusionspumprate selektiv steuern können sollen, wodurch eine größere Breitenflexibilität, eine größere Konstruktionsgenauigkeit der neuartigen Dämpfungsvorrichtung erzielt und auf diese Weise die Funktion verbessert, die Kosten derartiger Vorrichtungen herabgesetzt werden sollen. Es ist auf diese Weise möglich, bestimmte Arten der Dämpfungsvorrichtungen auf Dauer aufzublasen, wobei leicht verfügbare Gase wie Stickstoff oder Luft verwendet werden, wobei zum Beispiel Stickstoff das Halte- bzw. eingeschlossene Gas bildet. Eine solche Dämpfungsvorrichtung erfordert, vgl. DE 40 01 542 A1, u. a. einen verschlossenen Mantel, der wenigsten eine durch wenigstens eine mit beabstandeten Wandbereichen eines filmartigen Materials gebildete Kammer aufweist, worauf bei einer Einrichtung entsprechend der hier beschriebenen Erfindung zur Lösung derer Aufgabe verzichtet werden kann. Anderen falls erfordert eine solche Dämpfungsvorrichtung, vgl. DE 40 01 542 A1, u. a. einen verschlossenen Mantel, mit wenigstens einer Kammer, die durch wenigstens mit Abstand angeordnete Wandbereiche eines filmartigen Materials gebildet ist, worauf bei einer Einrichtung entsprechend der hier beschriebenen Erfindung zur Lösung derer Aufgabe ebenfalls verzichtet werden kann.

Bekannt ist ein "Netz ... für herzustellende Gegenstände", vgl. DE 37 41 703, dem ein Liniensystem zugrunde liegt, gebildet aus Rechtecken, deren kürzere Seiten halb so lang wie die längeren Seiten und die durch Diagonalen unterteilt sind. Der Begriff Netz ist gemäß Beschreibung von DE 37 41 703 auf die mathematische Definition, nach der das Netz eine Figur ist, bei welcher zu jeder der in einem Punkte einander schneidenden geraden Linien mehrere parallele Linien sind, beschränkt.

Berücksichtigt wurden Netzgebilde in Form von Perücken oder wasserdurchlässiger Kunstrasen, vgl. DE 20 51 108 B2. Diese können so beschaffen sein, daß an netzartigem oder prorösen großflächigen Träger haar- oder halmähnliche Gebilde befestigt sind. Derartige Konstruktionen werden zu dekorativen Zwecken verwendet. Für die erfingungsgemäße Verwendung zur Ausnutzung ihrer etwa vorhandenen bedingten Durchlässigkeit, entsprechend der erfindungsgemäßen Anforderungen, sind diese weder gedacht noch sonderlich geeignet.

Bekannt sind Windmühlen, wie beschrieben durch Fausto Veranzio in dem Werk "Machinae novae Fausti veranticum declaratione venitiis" aus dem Jahre 1615/1616 (Libri rari des Deutschen Museums München), bei der die Mühle einen senkecht stehenden Wellbaum hat. Die Flügelarme sind so ausgerichtet, daß die den Wind von einer Seite auffangen, an der anderen vorbeilaufen lassen. Bei einer mit Segeln getriebenen Mühle steht der Wellbaum aufrecht, an ihm sind über Kreuz zweifach Segelstangen befestigt. Außerdem haben sie Flügel, an denen Segel aufgespannt sind. Sie sind so angeordnet, daß sie auf der einen Seite des Wellbaums den Wind auffangen, auf der anderen ihm ausweichen. Diese Segelstangen ergeben vier Strukturen, die entfernt jeweils mit den erfindungsgemäß geforderten gitterartigen Haltestrukturen korrespondieren, wobei diese Strukturen jedoch jeweils nur einen Durchlaß aufweisen und insofern eher als Rahmen oder als Gabel bezeichnet werden könnten. Entsprechenden Darstellungen ist zu entnehmen, daß die Segel in Holzahmen so gespannt sind, daß der von links wehende Wind das hintere Segel gegen den Rahmen preßt, so daß es vom Wind mit seinem vollen Strömungswiderstand nach rechts gedrückt wird, in dieser Stellung vom Rahmen wegschwenkt. Bei Weiterdrehung wird es mit einem geringen Strömungswiderstand gegen den Wind wieder in Arbeitsstellung gebracht. Die Darstellung weist jedoch beim rechten hinteren Segel bzw. Flügel einen Fehler auf, der eine kontinuierliche Funktionsweise in Frage stellt. Ähnlich werden Wasserräder beschrieben, welche so hergestellt sind, daß sie, wie immer man sie ins Wasser taucht, ihren Dienst verrichten. Das rührt von den Angeln her, an denen die Flügel befestigt sind. Durch das doppelte Kreuz, welches das Rad hält, geht ein viereckiger Wellbaum, nicht gar zu stark, was dem allgemeinen Gebrauch widerspricht. Andere bohren Löcher durch den Wellbaum, stoßen die Stangen hindurch.

Die Konstruktion von Fausto Veranzio wurde von Beatson, vgl. Felix von König in "Das praktische Windenergie-Lexikon", Verlag C. F. Müller, Karlsruhe, 1982, S. 13, zu einem Windrad mit vertikaler Achse und 8 Flügeln, die in je 4 Klappen unterteilt sind, verbessert. Durch die Unterteilung der ursprünglich großen Klappen wurde die mechanische Beanspruchung verringert. Die Flügel könnten durch die gitter- oder kammartigen Haltestrukturen und die Klappen jeweils durch Sperrelemente gemäß dieser Erfindung ersetzt werden, wobei die 4 Klappen, zur eindeutigen Abgrenzung von dem alt Bekannten, durch mehr als vier Sperrelemente ersetzt sein müßten, um der Erfindung zu entsprechen.

Aufgabe der Erfindung ist es, ein Kamm- bzw. Gittergebilde zuschaffen, das von jeder Seite unterschiedlich durchgängig ist, um die im folgenden beschriebenen Verwendungen bzw. die Herstellung von daraus zusammengesetzten Gebilden bzw. entsprechende Netz- bzw. Gittergebilde als Teil von Gebilden mit speziellen Verwendungsmöglichkeiten zu ermöglichen. Dabei wird die Durchgängigkeit (d) durch das hindurchgehende oder nicht hindurchgehende Medium aufgrund der Eigenart der Einrichtung bewerkstelligt. Das Medium kann aus Körper, Moleküle, Teilchen, z. B. Ionen, Protonen, Photonen gebildet sein, wobei sich diese Bestandteile des Mediums relativ zur Einrichtung bewegen, z. B. indem diese Bestandteile bzw. das Medium schwingen, oder Z. B. indem das Medium ruht, jedoch die Einrichtung bewegt wird, z. B. durch einen Motor. Die bedingte Durchlässigkeit (d) kann für regellos sich bewegende oder/und schwingend sich bewegende und/oder strömend sich bewegende und/oder sich nicht bewegende Objekte, Körper oder/und Teilchen bestehen.

Konstruktion, vgl. Anspruch 1, aus beweglichen bzw. schwenkbaren Gebilden, den Sprerrelementen, deren Bewegungsfreiheit eingeschränkt ist durch ein oder mehrere netz- oder kammartige Gebilde, der Haltestruktur. Dabei wird diese Konstruktion aufgrund ihrer bedingten Durchlässigkeit (d) verwendet, denn eine Seite der Fläche des netz- oder kammartigen Gebildes in Kombination mit den Sperrelementen, d. h. eine Seite des Absorbnetzes, ist leichter durchlässig als die andere Seite, welche dadurch absorbierend eingesetzt werden kann. Die Durchlässigkeit (d, c2, d1) kann sich auf Objekte, Körper, Moleküle, Teilchen, z. B. Ionen, Protonen, Photonen usw., Schwingungen, z. B. Schall, oder Strahlungen, z. B. Licht, oder Strömungen beziehen. Wenn ein Absorbnetz, vgl. Anspruch 4, manuell oder durch einen motorischen Antrieb bewegt wird, wird je nach Bewegungsrichtung, bevorzugt bei Bewegungen in verschieden Richtungen nacheinander, auch ein ruhendes Medium beeinflußt und z. B. in solche Teile getrennt, für die das Absorbnetz eine Durchlässigkeit (d1, c2), insbesondere eine bedingte Durchlässigkeit (d) aufweist, auf der einen Seite (d2, 14), und denen für die nur eine geringe oder keine Durchlässigkeit besteht, auf der anderen Seite (d1, 13). Was auf ruhende Medien zutrifft, tritt auch für Medien zu, deren Bestandteile sich regellos durcheinander bewegen, z. B. ohne daß darin eine Strömung zu erkennen wäre, wie z. B. bei ruhenden Gasen, in denen die Bestandteile in Form von Molekülen sich sehr wohl bewegen, allerdings weitgehend regellos und nach außen hin neutral. Der gewünschte Effekt laßt sich teilweise auch erst dadurch erzielen oder verbessern, daß das Absorbnetz (01) oder die Konstruktion, in der es integriert ist, bewegt bzw. in Schwingung bzw. Vibration versetzt wird, wobei die Größe der Hin- und Herbewegung bevorzug der Größe der Bewegungsfreiheit der losen Enden (19) entspricht oder größer ist, so daß bei jeder Hin- und Herbewegung die Sperrelemente beide extremen Lagen (b1, b2) einmal einnehmen können. Dazu kann die Haltekonstruktion (c, 37) z. B. mit einem Vibrationsmotor oder einer Schallquelle gekoppelt und damit entsprechend angeregt werden. Die Durchlässe (c2, 38) können für Schwingungen, z. B. Schall bzw. durch Schall bewegte Moleküle, oder für Strahlungen, z. B. Licht, Sandstrahl oder Wasserstrahl durchlässig sein, sie können z. B. Öffungen oder durch Zwischenräume kamm-, bürsten- oder grätenartiger Konstruktionen gebildet werden.

Die mit der Erfindung erzielten vorteilhaften Wirkungen bestehen z. B. darin, daß regellos oder schwingend bzw. strömend sich bewegende Teilchen oder Körper besser gesammelt bzw. absorbiert und/oder die Energie der Teilchen oder Körper umgeformt und/oder in eine bestimmbare Richtung geleitet werden können. Energiezustände, wie Strömungs- oder Schwingungszustände, können umgewandelt werden. In dem Sinne kann z. B. auch die Ausbreitungsrichtung von Schwingungen oder Strömungen oder deren Frequenz durch die Erfindung beeinflußbar sein.

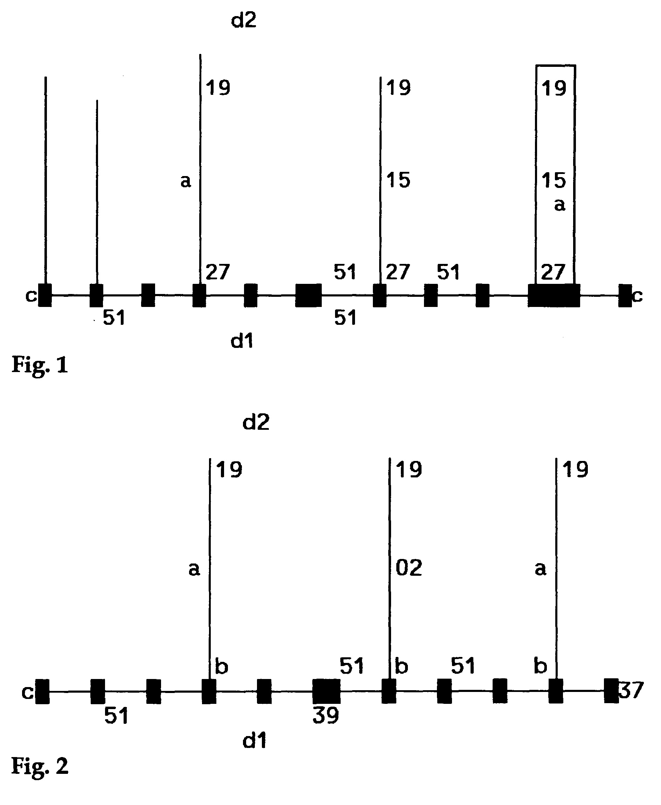

Die vorteilhafte Wirkung der Erfindung gegenüber Baustrukturen der Art von US 2 918 992 ergibt sich daraus, daß die Baustrukturen nach US 29 18 992 keine durchlässige Struktur, und schon gar keine einseitig durchlässige Struktur ergibt, sondern insbesondere zur Behausung geeignete Gebäudestrukturen beschreibt. So sieht zwar Fig. 2 aus wie ein durchlässiges Gittergebilde, tatsächlich sind jedoch lediglich sichtbare Kanten als Striche dargestellt, wärend die Flächen zwischen diesen Stichen, wie sich dem Text zur Fig. entnehmen laßt, ausgefüllt sind durch plattenartiges bzw. wandartiges Material. Wird die Türöffnung als durchlässige bzw. gitterartige Struktur betrachtet, so weist diese doch weniger als fünf Durchlässe und weniger als fünf schwenkbare Sperrelemente auf, wie im Anspruch 1 gefordert. Wird die Türe weiterhin als schwenkbares Sperrelement angesehen, so ist zudem dieses Sperrelement doch nicht als selbstständig schwenkbar im Sinne der Erfindung anzusehen, da eine Türe üblicherweise manuell, seltener auch durch einen Antrieb, wie einem Motor, geschwenkt wird. Würde eine solche Türe dagegen zum Beispiel durch eine Luftströmung geschwenkt, so würde dies zu erheblich mehr Lärm als eine erfindungsgemäße Einrichtung führen. Auch könnte eine solche Baustruktur die daraus entstehenden Belastungen nicht ohne großen Materialaufwand so lange standhalten wie eine erfindungsgemäße Einrichtung.

Die Vorteilhafte Wirkung der Erfindung gegenüber den Ausführungen in der Veröffentlichung GB 2 108 539, besteht darin, daß die dortigen Angaben nicht anstreben Netz- bzw. Gitterbgebilde zu schaffen, die von jeder Seite unterschiedlich durchgängig sind und so fehlen insbesondere Angaben über Durchlässe und Sperrelemente, die in der Lage wären, diese Durchlässe in der einen Lage frei zu geben bzw. in einer anderen Lage zu verschließen.

Die Vorteilhafte Wirkung der Erfindung dieser Veröffentlichung gegenüber den Ausführungen in DE 37 41 703 entsteht insbesondere dadurch, daß soweit überhaupt ein Netz im Sinne der Veröffentlichung von DE 37 41 703 eingesetzt wird und soweit überhaupt diesem Netz ein Liniensystem zugrunde liegt und soweit überhaupt dieses Liniensystem aus Rechtecken besteht und soweit überhaupt deren Seiten in einem Verhältnis von 1:2 stehen, die Rechtecken nicht durch Diagonalen unterteilt sein müssen, um die Aufgabe der Erfindung dieser Veröffentlichung zu lösen. In DE 37 41 703 wird kein Merkmal beschrieben, auf das die Beschreibung der erfindungsgemäß geforderten Sperrelemente zutreffen würde und ist deshalb ungeeignet die Aufgabe dieser Erfindung zu lösen.

Die vorteilhafte Wirkung der Erfindung gegenüber Windmühlen und Wasserrädern z. B. entsprechend den Beschreibungen im Werk von Fausto Veranzio besteht darin, daß die erfindungsgemäße Aufgabe besser und umfassender gelöst wird, weil, sofern das einseitig durchlässige Gittergebilde überhaupt in einer Windmühle eingesetzt und sofern überhaupt die Sperrelemente aus Flügel, an denen Segel aufgespannt sind, bestehen, erfindungsgemäß mehr als vier solcher Flügel pro Haltestruktur eingesetzt würden. Erfindungsgemäß müßte das Tuch nicht in einen Rahmen als Segel gespannt noch überhaupt gespannt sein, zumal sofern überhaupt Segel verwendet werden, diese an einer gitterartigen Haltestruktur angeordnet wären, vor der das Segel frei schwenkbar ist. Obwohl erfindungsgemäß zwar die Sperrelemente auch aus tuchartigem Material sein können, wofür sich wegen der besonderen Belastbarkeit herkömmliches Segeltuch besonders eignen würde, kann dieses nicht ohne weiteres mit einem Segel gleichgesetz werden, da ein Segel üblicher weise erst durch ein Aufspannen des Tuches entsteht. Dadurch daß erfindungsgemäß mehr als vier Sperrelemente eingesetzt würden vor einer gitter- oder kammartigen Haltestruktur, mit der jeder Flügel der Windmühle oder des Wasserrades aufgrund seiner zu geringen Zahl von Durchlässen nur entfernt korrenspondiert, hätte eine Windmaschine mit erfidungsgemäßen einseitig durchlässigen Gittergebilden einen besseren Gleichlauf, ein geringeres Geräuschaufkommen, einen besseren Wirkunggrad und eine größere Lebensdauer.

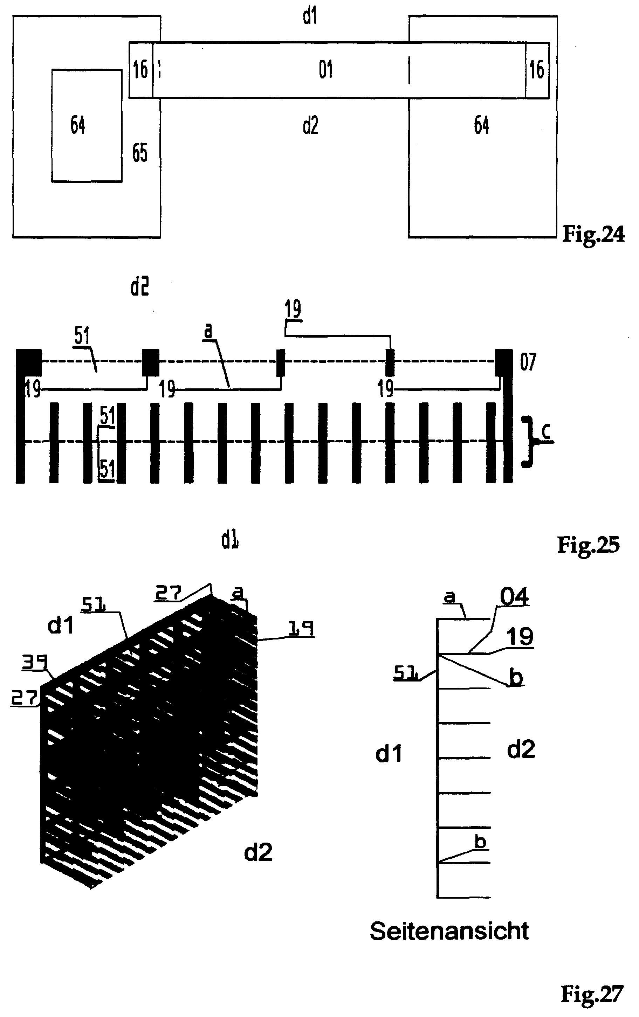

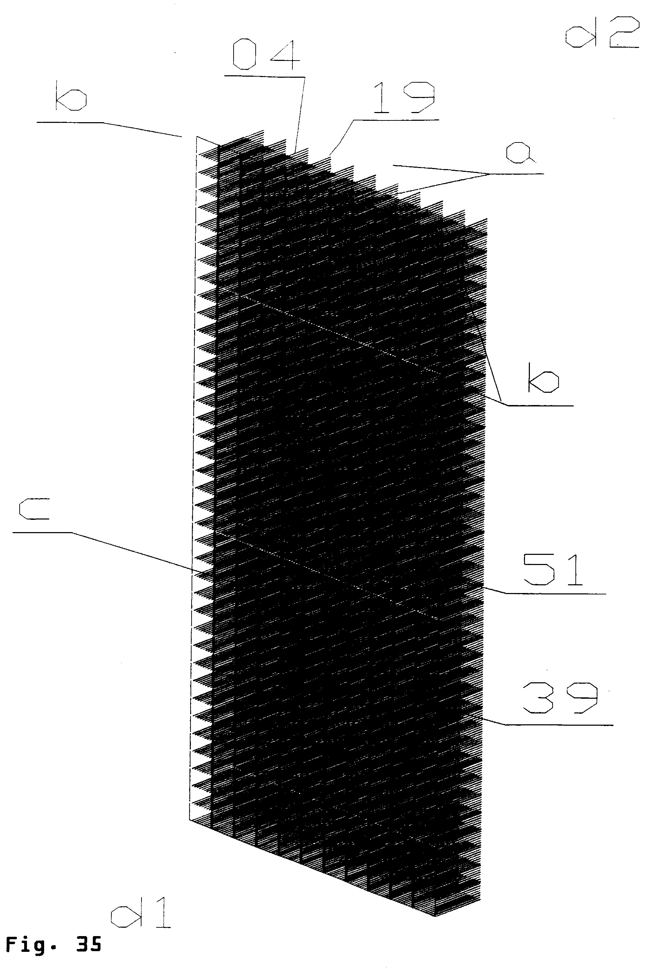

Der Vorteil zur Konstruktion bei Beatson, die pro Flügel 4 Klappen und entsprechend 4 Flächen aufweist, die geöffnet und geschlossen werden können, besteht bei der Erfindung darin, daß mehr als 4 Flächen, vorzugsweise wesentlich mehr, Flächen vorhanden sind, vgl. Fig 35. Die einseitig durchlässigen Gittergebilde der Erfindung eignen sich außerdem nicht nur zur Umwandlung von Energie aus Wind in mechanische Energie wie bei Beatson, sondern auch zum Sammeln von Objekten, vgl. Anspruch 7 auch zum Umformen von Energiezuständen und zur Verwendung in diversen Konstruktionen, vgl. Fig. 24, 31, 32, 33, 36, 38, 39, 40, 41, 42, 43, 45, 46, 48, 49, 50, 51.

Ausführungsbeispiele der Erfindung sind in den Zeichnungen dargestellt und werdenfolgend näher beschrieben. Die Größenverhältnisse können auch anders als dargestellt sein, insbesondere sind in der Regel nur aus Darstellungsgründen weniger Sperrelemente gezeichnet als angestrebt werden sollte. Die Zahl der Sperrelemente (a, 02, 04, 15), die Zahl der undurchlässigen Wandungen (39, 57) bzw.die Zahl der Durchlässe (38, 51) und deren Verhältnis zueinander, wie in Fig. 1 bis 7, 13 bis 18, 23, 25 bis 36 und 39 bis 57, kann anders als dargestellt sein.

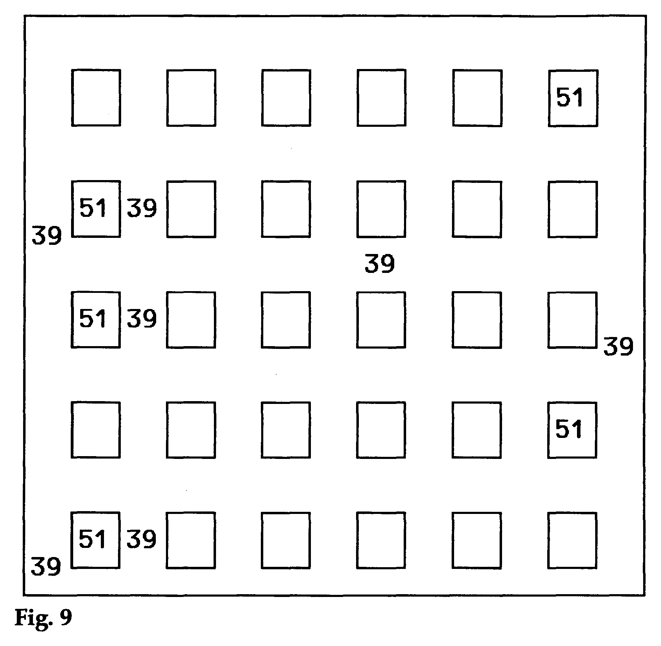

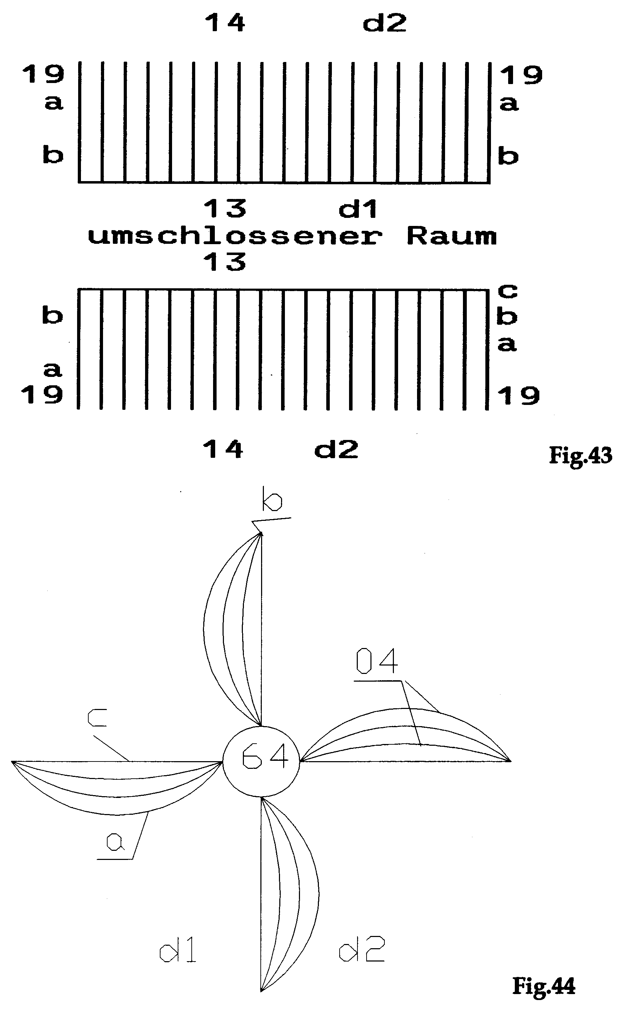

Fig 1: Ein Weg zum Ausführen der beanspruchten Erfindung in einem stark vereinfachten Schema in Ansicht bzw. im Schnitt senkrecht zur flächigen Ausdehnung des Gebildes, bzw. senkrecht zur durchlässigen (d1) oder weniger durchlässigen (d2) Seite. Auf einer möglichen Ausführungsform von Merkmal (c, 37) sind in diesem Falle einseitig bewegliche bzw. schwenkbare Gebilde (15, a), auch als Sperrelement (a, 15) oder Merkmal 1.a oder Merkmal (a) bezeichnet, befestigt (27). Schwenkbar bzw. Beweglich soll hier heißen, daß diese relativ zur Haltestruktur (c), folgend auch als Merkmal 1.c oder Merkmal (c) bezeichnet, beweglich sind, bzw. Merkmal (c) in Bezug auf Merkmal (a) weitgehend unbeweglich oder starr ist. Durch die Befestigung (27) an Merkmal (c) wird die Bewegungsfreiheit in diesem Beispiel eingeschränkt. Eine weitere Einschränkung der Bewegungsfreiheit entsteht dadurch, daß z. B. die Öffnungen (51) in der Fläche von Merkmal (c) kleiner als die Größe der beweglichen Gebilde (15) sind. An anderen Stellen sind diese Gebilde (15) weitgehend frei beweglich (19), im folgende aus als lose Enden (19) bezeichnet. Der Bewegungspielraum der Merkmale (a) ist deshalb auf die weniger gut durchlässige Seite (d2, 14) beschränkt, während die Konstruktion von der Seite (d1, 13) durchlässiger ist. Die Durchlässigkeit (d) kann, je nach den Maßen der Konstruktion der Ansprüche, für diverse Medien aus oder mit Bestandteilen wie Körper, z. B. Vögel, Mikroorganismen oder leblose Körper, z. B. Sandkörner, wieTeilchen, z. B. chemische Verbindungen, chemische Elemente oder Teile davon bestehen. Diese Bestandteile können in verschiedenen Aggregatzuständen sein, wie gasförmig, z. B. Luft, wie flüssig, z. B. Wasser, und in verschiedenen Energiezuständen sein, wie Schwingungen, z. B. Schall, wie Strömungen, z. B. Wasser- oder Luftströmungen, sowie auf Strahlungen, z. B. Licht oder Sandstrahlen. Die Öffnungen (38, 51) entsprechen in Form und Größe mindestens den Maßen der Bestandteile des behandelten Mediums, sind jedoch vorzugsweise um ein vielfaches größer. Soll z. B. ein einseitig durchlässiges Absorbnetz für Atome konstruiert werden, so haben die Öffnungen mindestens Öffnungsweiten in der Größe von Atomdurchmessern, sind vorzugsweise um ein vielfaches unter Umständen sogar um mehrere Zehnerpotenzen größer. Die Öffnungen können dazu in ein flächiges Material mit Laserwerkzeugen eingebrannt werden. Die Sperrelemente (a, 15) sind z. B. vorzugsweise mindestens so lang wie die Öffnungsweite der Öffnungen (51). Die Dicke der Sperrelemente ist gering, z. B. die Dicke eines Atoms, realisiert z. B. durch eine Kohlenstoffkette oder andere fadenartige Gebilde, die bevorzugt an der undurchlässigen Wand (24, 39) von Merkmal (c, 37) fixiert (16, 27) sind, z. B. durch Kleber, Verschweißen, Knüpfen. Die Form der Sperrelemente, wie angedeutetet, sehr unterschiedlich sein. Je nach gewählter Form und Steifigkeit des Materials der Sperrelemente wird ein jeweils anderes Medium beeinflußt. In Fig. 9, 10, 15, 37 und 11 sind dazu beispielhaft einige der möglichen Ausführungen als Ansichten aus Richtung (d1). Z. B. in Fig. 24 und 44 sind Beispiele, wie das dargestellte Gebilde eingesetzt werden kann.

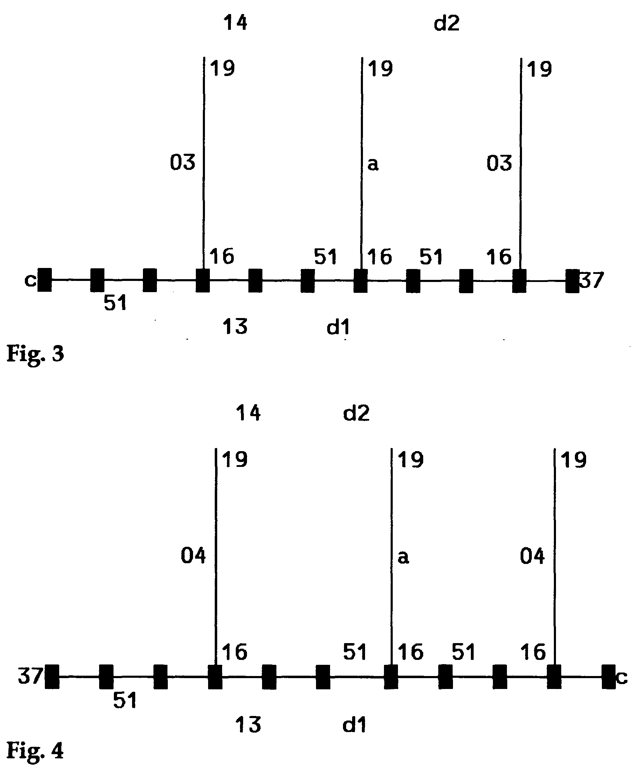

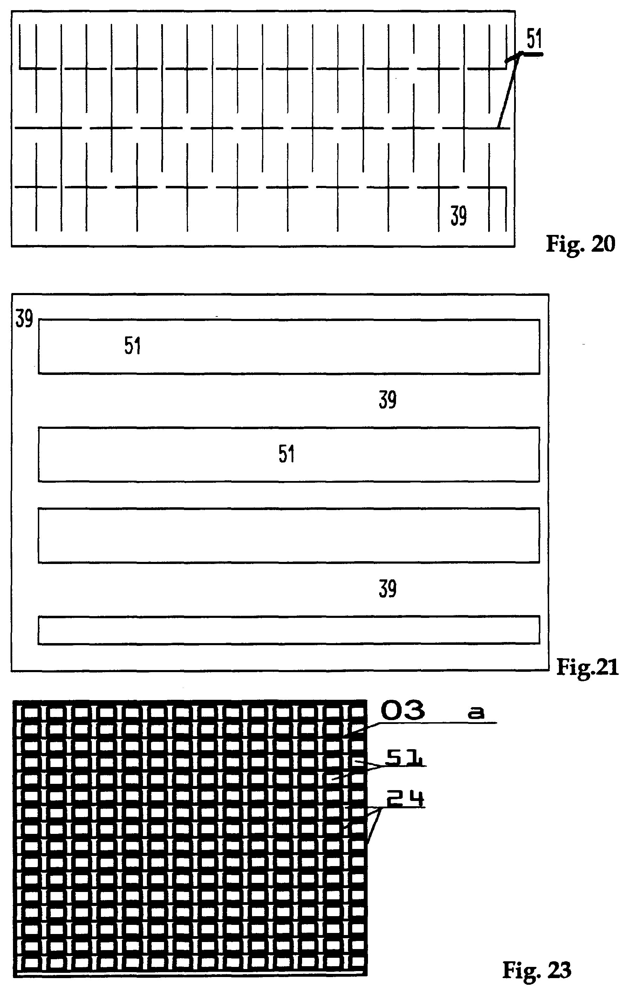

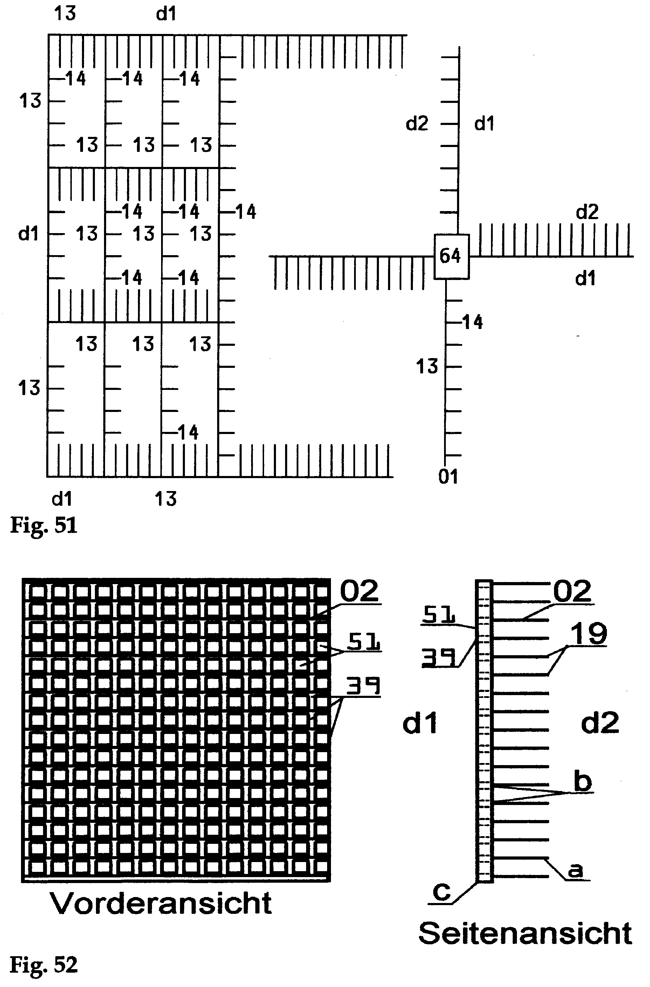

Fig. 2: Ein Weg zum Ausführen der Erfindung, besonders zum Ausformen von Anspruch 2, in einem stark vereinfachten Schema in einer Ansicht senkrecht zur flächigen Ausdehnung des Gebildes. Dabei werden Sperrelemente (15), Merkmal (a), durch folienstreifenähnliche Gebilde (02) realisiert. Die Öffnungen (51) können andere Formen haben. Die undurchlässige Wandung (39) kann gegenüber den Öffnungen (51) stark reduziert sein, z. B. auf die Dicke eines Fadens. Die Folienstreifen (02) sind hier zwar senkrecht zu Merkmal 1.c (c) dargestellt (b2), diese können jedoch auch in anderen Stellungen befestigt sein bzw. durch deren Beweglichkeit in sich selber oder durch deren Beweglichkeit in der Befestigung (b) verschiedene andere Stellungen einnehmen. In Fig. 23 ist dazu eine etwas andere Ausformung bzw. Darstellungsart bezüglich Anspruch 2 aus Richtung (d2). Vgl. Fig. 52 für etwas andere Ausformungen oder Darstellungsarten bezüglich Anspruch 2. Vgl. Fig. 9, 10, 11, 15, 37 für einige der möglichen Ausformungen mit Sicht von unten (d1). Im übrigen siehe hierzu auch die Beschreibung zu Fig. 3.
Fig. 3: Ein Weg zum Ausführen der Erfindung, besonders zum Ausformen von Anspruch 3, wobei Merkmal (a) durch tuch- (02) oder folienartigem (03) Material in Form von Streifen (03) realisiert wird. Tuchähnliches Material kann hier auch gewebe-, leder- oder filzartig bis hin zu papier- oder pappeartigem Material bedeuten. Vgl. darüberhinaus auch die Ausführungen zu Fig. 2. Die Befestigung (16), die die Bewegungsfreiheit der ansonsten beweglichen Streifen (03) aus tuchähnlichem Material einschränkt, darf auch in sich beweglich, zum Beispiel eine gelenkartige Befestigung, sein. Die Befestigung muß so gestaltet sein, daß die Merkmale (a) in der unmittelbaren Nähe von Merkmal (c) gehalten werden und nicht etwa durch die Strömung durch das Gebilde mitgerissen oder durch Vibrationen abgerissen werden. Vgl. Fig. 23 für eine etwas andere Ausformung und Darstellungsart, besonders bezüglich Anspruch 2.
Fig. 4. Ein Weg zum Ausführen der Erfindung, besonders zum Ausformen von Anspruch 2 mit faden-, fasrigen oder haarigen Gebilden als Sperrelemente (a, 15, 04), Merkmal 1.a (a). Die Ansichtsebene liegt in dieser Darstellung senkrecht zur flächigen Ausdehnung des Gebildes. In diesem Beispiel wird Merkmal (a) durch fadenförmige Gebilde (04) realisiert, dargestellt in schematischer Seiten- oder Schnittansicht bzw. Seiten- oder Schnittausschnitt. Fadenähnlich soll hier heißen, daß diese Gebilde, im Verhältnis zum Querschnitt des Gebildes, sehr lang sind, z. B. eine Molekül- oder Atomkette. Diese Gebilde sind damit in Längsrichtung zumeist sehr stromlinienförmig, weisen jedoch quer dazu einen relativ hohen Widerstand, z. B. für Strömungen, auf. Aufgrund der großen Länge im Verhältnis zu ihrem Querschnitt, sind diese fadenartigen Gebilde meist bereits in sich biegsam und damit in sich beweglich. Je nach Verwendungszweck können auch draht-, nadel- oder seilähnliche Gebilde besser geeignet sein. Merkmal (a) kann dabei z. B. haarig oder schlingenförmig an oder vor Merkmal (c) befestigt sein. Das eine Ende von Merkmal (a) ist hier einseitig (16) an einem herkömmlichen flächigen, durchlässigen Gebilde (37) bzw. (c), z. B. in Form eines Netzes, befestigt (16) und dadurch relativ unbeweglich. Das jeweilige andere Ende (19) ist dagegen relativ beweglich. Die Bewegungsfreiheit der losen Enden (19) wird jedoch durch das herkömmliche flächige, durchlässige Gebilde (37, c) eingeschränkt. Die Durchlässigkeit (c2) kann z. B. durch Öffnungen (51), aber auch entsprechend Anspruch 8 realisiert werden. Vgl. Fig 35 für weitere mögliche Ansichten bzw. Ausführungsformen in perspektivischer Darstellung. Vgl. z. B. Fig. 44 für alternative Ausführung nach Anspruch 2. Vorteil des Gebildes ist, daß eine relativ durchlässige Seite (13, d1) und eine relativ undurchlässige Seite (14, d2) entsteht. Die Durchlässigkeit kann sich je nach Bemessung der Maße auf Körper, z. B. Fische, Teilchen, z. B. Moleküle oder Ionen, Schwingungen und Strahlung beziehen. Entsprechende Dinge, für die diese bedingte Durchlässigkeit besteht, können ausgesondert bzw. gesammelt werden.

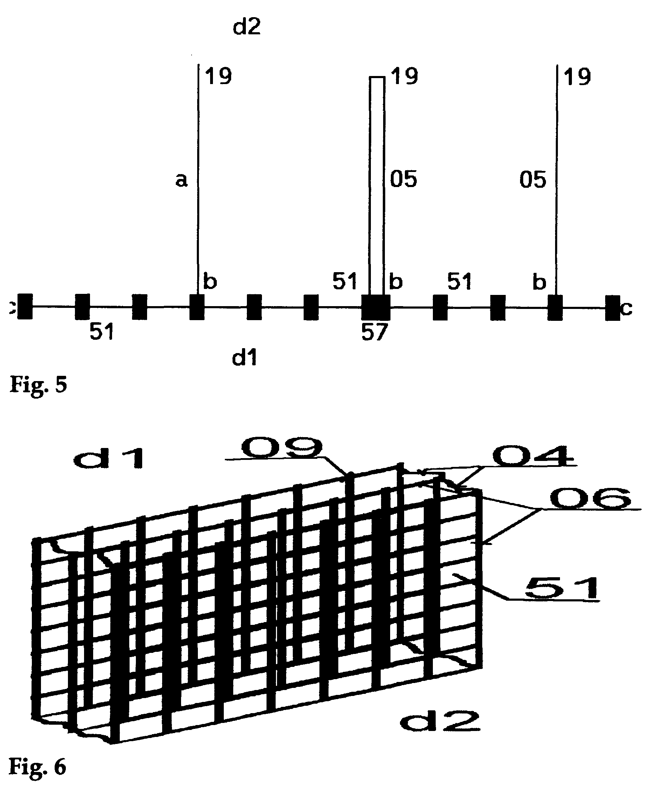

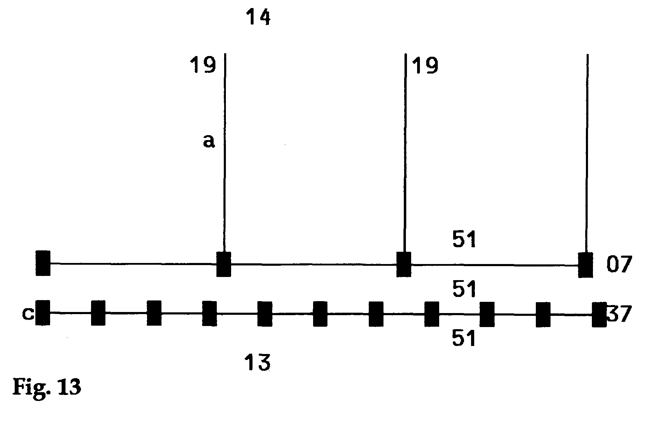

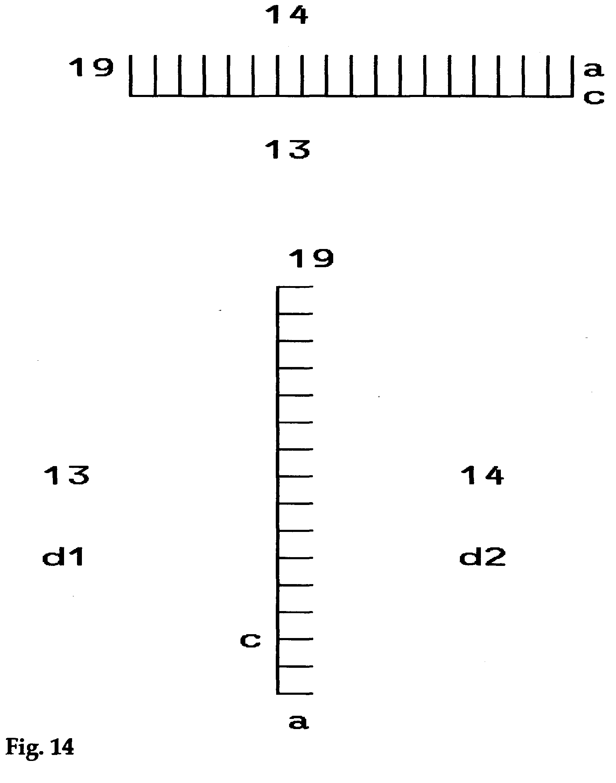

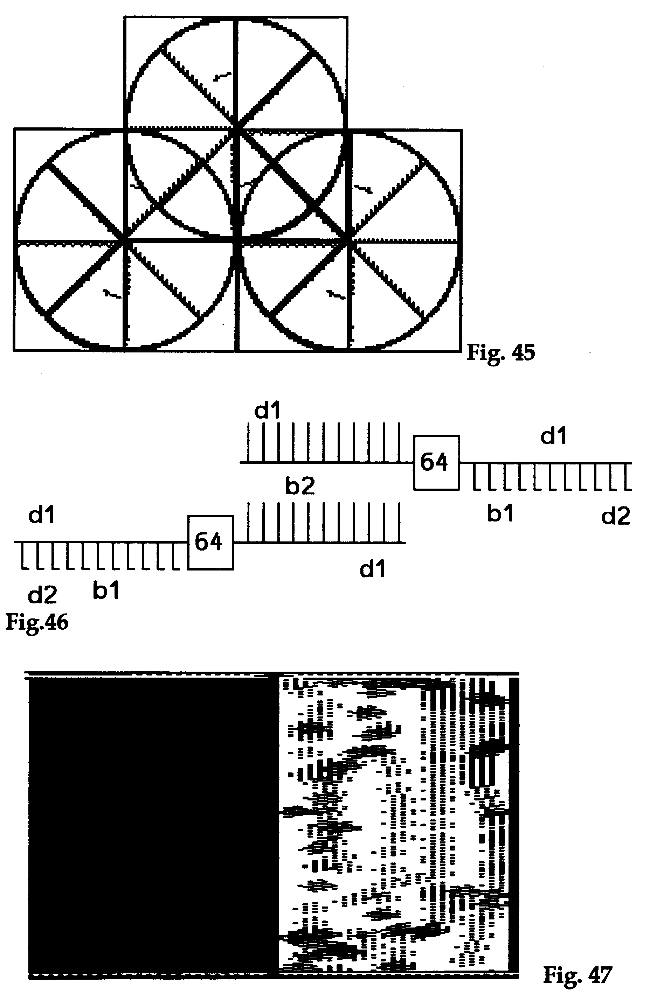

Fig. 5.: Ausführung der Erfindung, besonders zur Erläuterung von Anspruch 2 mit fransenförmigen Gebilden (05) mit Sicht senkrecht zur flächigen Ausdehnung des Gebildes, soll bedeuten senkrecht zur relativ durchlässigen Seite (d1, 13) bzw. zur relativ undurchlässigen Seite (d2, 14) der Einrichtung, auch als Absorbnetz bezeichnet. Fransen (05) sind in diesem Beispiel direkt an Merkmal (c) befestigt (b) bzw. damit verbunden (b). Für eine Variante, bei der Fransen (05) nicht unmittelbar an Merkmal (c), sondern davor befestigt werden, vgl. Fig. 13 und/oder 29. Fransenförmig bzw. - artig soll dabei heißen, daß das Gebilde (05) im Verhältnis zu den Abmessungen seines Querschnittes sehr lang sein kann und sich die Breite erheblich von der Dicke unterscheiden kann. Daraus ergibt sich der Vorteil, daß diese fransenartigen Gebilde (05) in sich recht schwenkbar (a1) bzw. beweglich sind, und die Befestigung (b, 16) in sich nicht unbedingt beweglich, z. B. in gelenkartiger Form, sein muß. In Fig. 14 ist die Darstellung in einer vereinfachten Symbolik zur Verwendung z. B. in Fig 45, 46. Vgl. Fig. 9, 10, 11, 15, 37 für einige der möglichen Ausformungen mit Sicht aus Richtung (d1). Vgl. Fig. 27 für eine der möglichen Perspektiven. Befestigung, die die Bewegungsfreiheit einschränkt (b); leichter durchlässige Seite, bzw. Merkmal (d1); schwerer durchlässige Seite, bzw. Merkmal (d2); fransenförmiges, bewegliches Gebilde (05, a); undurchlässige Wandung (57) mit Öffnungen (51). Verwendung des Dargestellten z. B. entsprechend Anspruch 7.
Fig. 6: Ausführung der Erfindung, insbesondere zur Erläuterung von Anspruch 2 mit Sperrelementen in Form von netzartigen Gebilden in isometrischer Darstellung. Dabei ist Merkmal 1.a (a) durch mehrere netz- oder gitterartige Gebilde (06) realisiert. Stellvertretend für weitere Netze (06), sind nur zwei Netze (06) dargestellt. Diese sind zum Beispiel an ein starres Gitter (09), ein stramm gespanntes Netz, Kombination mit Anspruch 8, beweglich bzw. schwenkbar befestigt. Die bewegliche Befestigung kann, wie in diesem Beispiel dargestellt, durch Fäden (04) erfolgen. Die Netze können auch an das relativ starre, d. h. in sich unbewegliche, Gebilde (09), realisiert z. B. durch das Gitter (09) oder ein stramm gespanntes Netzgebilde, durch Klammern, Nieten oder dergleichen befestigt sein, wobei sich die Netze (06) dann jedoch in sich beweglich sind. Der Begriff der Beweglichkeit bezieht sich auf das, wofür das Gebilde bedingt durchlässig ist, z. B. ein strömendes Medium. Die Sache, für die eine bedingte Durchlässigkeit erreicht wird, hat genügend Kraft Merkmal 1.a (a, 06), hier die netzartigen Gebilde (06), relativ zu Merkmal 1.c (c), hier durch das Gitter (09) vertreten, zu bewegen. Die eine Seite wird bei diesem Gebilde durchlässiger (d1) als die andere Seite (d2) sein, wobei sich die Durchlässigkeit z. B. auf eine Strömung beziehen kann. Je nach Strömungsgeschwindigkeit der Strömung im Verhältnis zur Eigenbewegung des Gebildes in Fig. 6 in Abhängigkeit u. a. von den Größen der Öffnungen (51), können sich die Seiten am Gebilde bezüglich der Durchlässigkeit vertauschen, was vor allem bei sehr kleiner Öffnungen zu beachten ist.

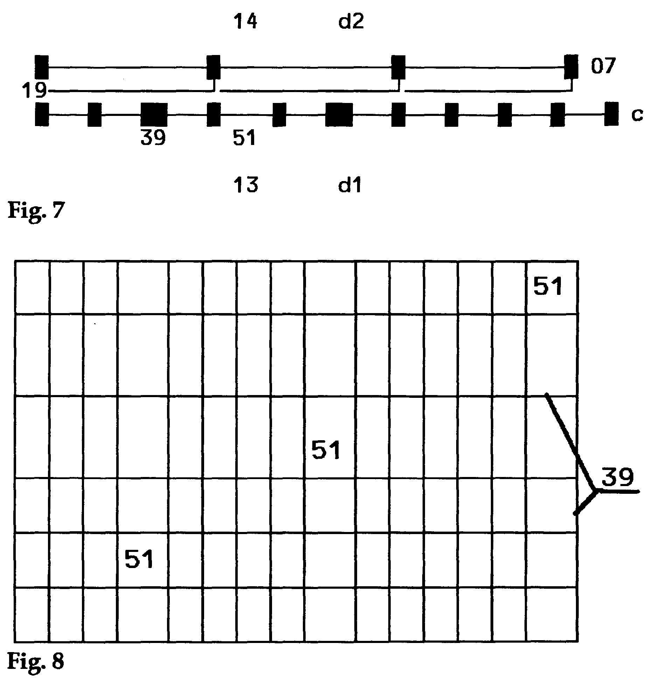

Fig 7.: Ausführung eines Absorbnetzes, insbesondere zur Ausformung von Anspruch 2 in der Ansichtsebene vertikal zur flächigen Ausdehnung des Gebildes. Beispiele möglicher Ansichten des flächigen Gebildes horizontal zur flächigen Ausdehnung des Gebildes mit eingeschnittenen Mustern (07) können z. B. Fig. 20, 54, oder 55 entnommen werden. Das flächige Gebilde (07) ist vor dem Merkmal 1.c (c) angeordnet (b). Der möglichst geringe Abstand zwischen Haltestruktur (c) und flächiges Gebilde (07) wird z. B. durch eine Verankerung beider Bauteile miteinander oder jeweils in der Umgebung, z. B. in einem Tor- oder Türrahmen oder im Boden gehalten. An den Schnittkanten der Muster entstehen bewegliche bzw. schwenkbare Enden (19). Die Bewegungsfreiheit dieser losen Enden (19) wird durch die undurchlässigen Wandungen (39) von Merkmal 1.c (c), z. B. durch entsprechend kleine Durchlässe bzw. Öffnungen (51) in Merkmal 1.c, beschränkt. Vgl. Fig. 13 für alternative Ausführung bzw. Ansicht. In Fig. 20, 54 bzw. 55 sind einige mögliche Ansichten bzw. Konstruktionselemente mit den Merkmalen 1.a aus Richtung (14) bzw. (d2). In Fig. 8, 9, 10, 11, 12 oder 17 sind einige mögliche Sichten aus Richtung (13) dargestellt. Das flächige Gebilde (07) kann auch in mehreren Lagen aufgebracht werden. Die losen Enden (19) liegen in diesem Bild bzw. Beispiel im Gegensatz zu Fig. 02 oder Fig. 03 an Merkmal 1.c an, Lage (b1). Ob die losen Enden (19) anliegen oder abstehen, hängt wesentlich von dem Zeitpunkt ab, in dem das Gebilde betrachtet wird. Anliegend (b1) oder abstehend (b2) sind lediglich zwei extreme Stellungen, bzw. Lagen, die die losen Enden (19) einnehmen können, in der Regel ist deren Stellung irgendwo dazwischen.

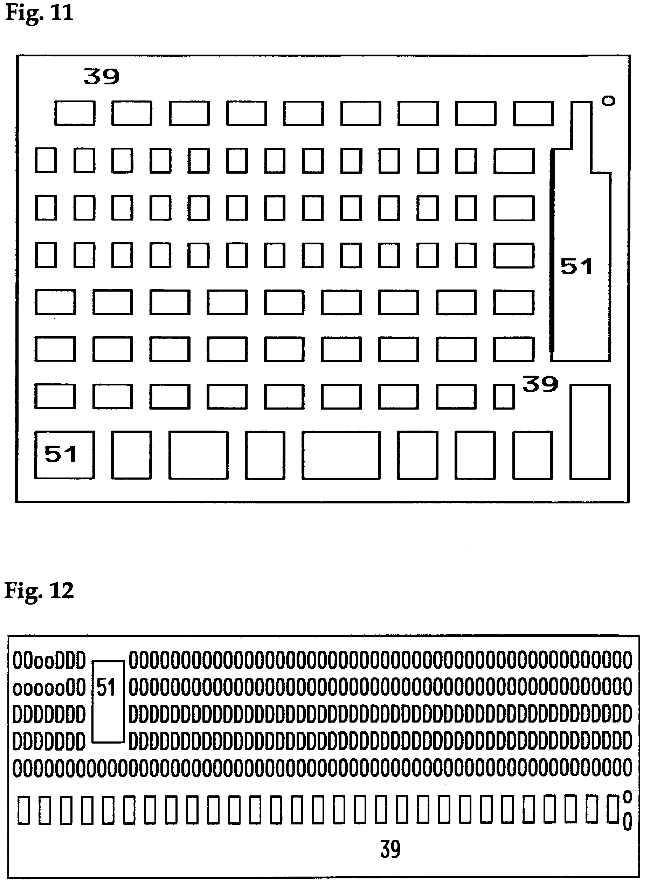

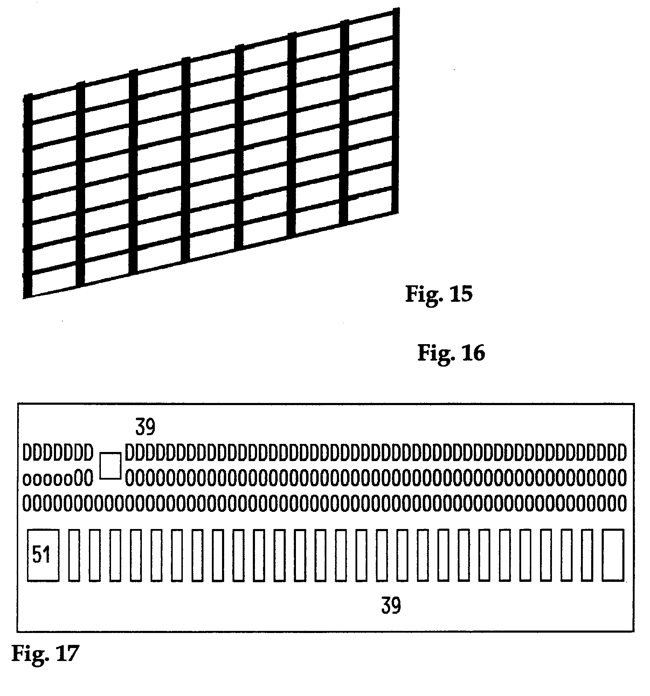

Fig. 8. Ein Element zum Ausführen der beanspruchten Erfindung, besonders entsprechend Anspruch 8. Dabei kann es sich um ein relativ stramm gespanntes oder starres, netztuchartiges Material handeln, das die Bewegungsfreiheit von Merkmal (a) durch seine relative Unbeweglichkeit in Bezug auf Merkmal (a) einschränkt. Nur die Linien in der Darstellung sollen undurchlässige Wandungen darstellen, die eine beliebige Dicke, Form und einen beliebigen Abstand zueinander haben können. Vgl. auch Fig. 9, 10, 11, 12, 17, 19, 21 oder 37 für andere mögliche Ausführungsformen. In Fig. 12 oder 17 sind dazu andere Ausführungsformen dargestellt, wobei verschiedene Formen der Öffnungen (51) und breitere undurchlässige Wandungen (39) dargestellt sind. Als besonders vorteilhaft für die Stabilität haben sich sechseckige Formen für die Durchlässe (51) erwiesen. Eine weitere, besonders herstellungstechnisch vorteilhafte Ausführung ergibt sich, wenn die dargestellte Struktur räumlich in die Darstellungsebene hineingehend bzw. daraus hervorkommend, mit einer erheblichen Tiefe bzw. einer erheblichen Höhe gestaltet wird. Die Tiefe oder Höhe entspricht dabei vorzugsweise etwa der haben bis vollen Größe der Öffnungsweite (51), kann aber auch ein mehrfaches davon betragen. Damit kann eine wabenartige Ausführung erreicht werden, wobei die Wabenkörper vorzugsweise einseitig (d1, 13) starr ausgebildet, z. B. durch Verdickungen, oder einseitig (d1, 13) stramm gespannt sind, vgl. Anspruch 2.
Fig. 9. Ein Beispiel für die Ausfuhrung von Merkmal 1.c (c, 37), insbesondere entsprechend Anspruch 8. Dabei handelt es sich um ein relativ stramm gespanntes oder starres Gitter, das in der Lage ist, die Bewegungsfreiheit von Merkmal 1.a (a) einzuschränken. Die undurchlässigen Wandungen (39) können eine beliebige Dicke, Form und einen beliebigen Abstand zueinander haben. Zur Verbesserung des Merkmales 1.d (d), kann die Fläche der undurchlässigen Wandungen in dieser Ansicht auf ein Minimum reduziert werden, das gerade noch den statischen und dynamischen Anforderungen an der Stabilität gerecht wird. In Fig. 8 ist dazu eine andere mögliche Ausführung dargestellt, bei der die undurchlässigen Wandungen (39) bis auf eine Strichstärke reduziert sind. In Fig. 12 oder 17 sind dazu andere Ausführungen, wobei insbesondere eine Auswahl weiterer möglicher Formen der Öffnungen (51) veranschaulicht sind.

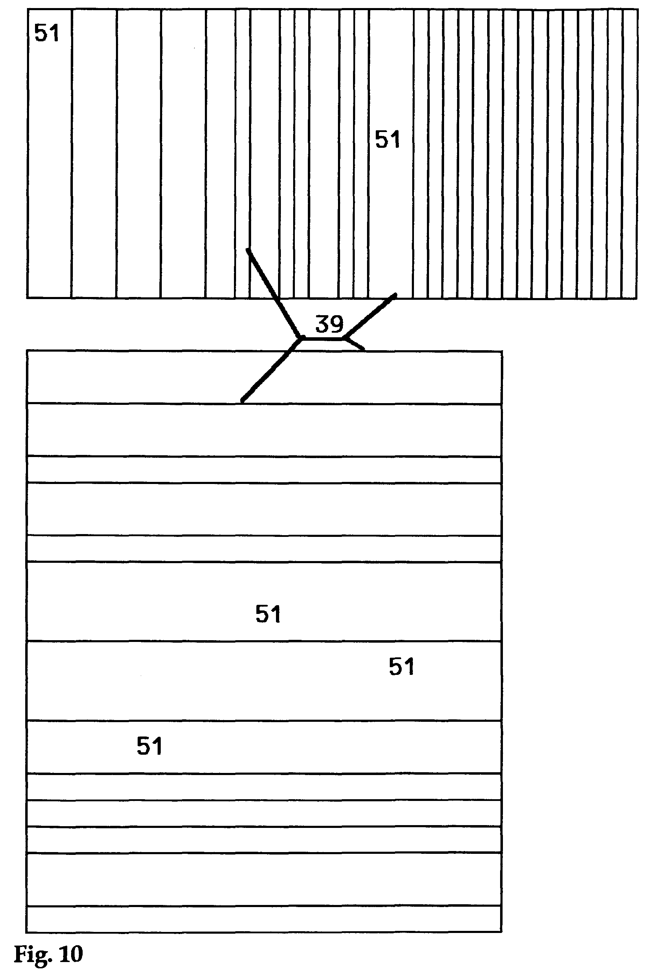

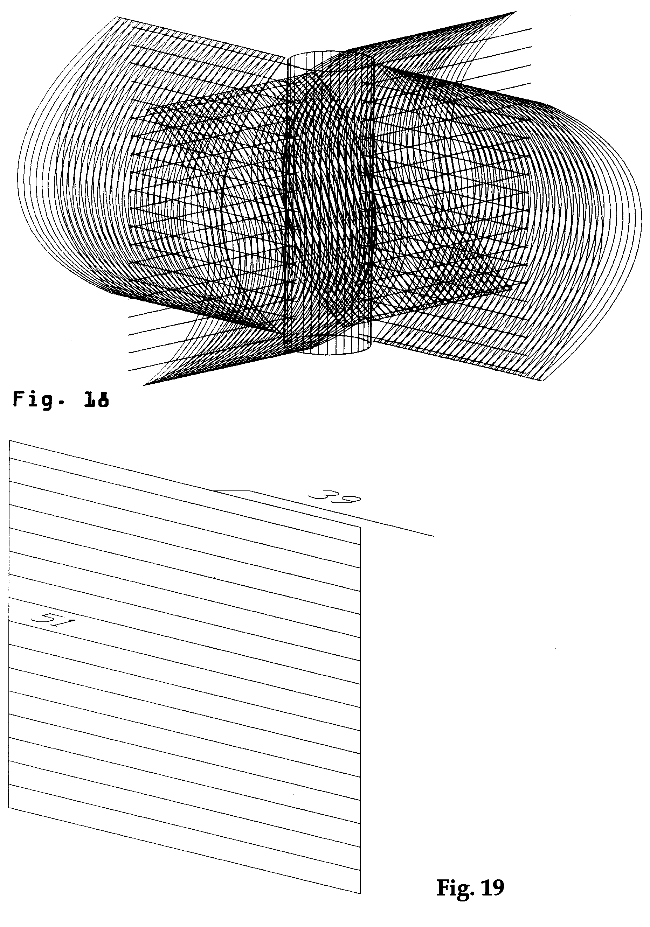

Fig 10. Ein Beispiel für die Ausführung von der Haltestruktur, Merkmal 1.c (c, 37), insbesondere entsprechend Anspruch 10. Verdeutlichung, was unter einem rostartigen Gebilde, verwendbar z. B. als Merkmal 1.c (c), verstanden werden soll. Die Linien in der Darstellung sollen stab- oder lamellenartige Gebilde als undurchlässige Wandung (39) darstellen, die eine beliebige Dicke, Form und einen beliebigen Abstand zueinander haben können. Für eine mögliche Minimierung der Fläche (39) vgl. Fig. 9. Die Öffnungen (51) werden bei Merkmal 1.c so bemessen, daß die Bewegungsfreiheit der Sperrelemente, Merkmal 1.a (a), möglichst, d. h. weitgehend, in der Ebene von Merkmal 1.c aufhört, das heißt daß Merkmal 1.a möglichst nur in Ausnahmesituationen durch die Öffnungen (51) auf die andere Seite gelangen kann. Andererseits sollen die Öffnungen (51) möglichst groß sein, um den Widerstand für die Sache, für die eine bedingte Durchlässigkeit erzielt werden soll, möglichst gering wird und die Sache möglichst ungehindert, von Seite (d1, 13) nach Seite (d2, 14), durch das dargestellte Gebilde gelangen kann. In Fig. 19 ist dazu eine mögliche Perspektive gezeigt.
Fig. 11. Beispiel für die Ausformung von Merkmal 1.c, insbesondere entsprechend Anspruch 8, z. B. durch siebartige Gebilde. Vorteil: Für die Öffnungen (51) im siebartigen Gebilde sind die unterschiedlichsten Formen möglich, unter anderem auch in der Form von (Laval-)Düsen.
Fig. 12: Verschiedene Ausführungsformen von Haltestrukturen, Merkmal 1.c (c, 37), insbesondere nach Anspruch 8. Die Linien im Rahmen sind, wie auch bei Fig. 9, einige der möglichen Formen von Einschnitten und bilden damit Öffnungen (51) in der ansonsten undurchlässigen Wandung (39). Als Schnittmuster eignen sich offene Muster, wie h, H, <, >, T, _, M, N, V, W, + oder ähnlich, vgl. Fig. 20, 54 oder 55 weniger, wenn es darum geht, die bedingte Durchlässigkeit (d) eines Absorbnetzes zu erhöhen. Zur Verringerung von Schallemissionen kann dies jedoch vorteilhaft sein. Muster, wie O oder D, die geschlossene Flächen haben, vgl. Fig. 8, 9, 10, 11, 15, 17, 37 oder 17 sind für Merkmal 1.c (c, 37) besser geeignet, wenn es darum geht, die bedingte Durchlässigkeit (d) eines Absorbnetzes zu erhöhen. Das folienähnliche Material muß dabei gegenüber Merkmal 1.a (a) relativ unbeweglich sein für die Kräfte der Sache, für die die bedingte Durchlässigkeit erreicht werden soll. Dies kann z. B. dadurch geschehen, daß die Folie entsprechend Dick ist oder/und daß diese in sich starr ist. Eine weitere Möglichkeit die Unbeweglichkeit des Gebildes in der Darstellung herbeizuführen besteht darin, dieses stramm zu spannen, z. B. durch Befestigung der Enden in einem Rahmen oder z. B. durch Gewichte, die das Gebilde, z. B. wenn es aufgehängt wird, stramm ziehen.

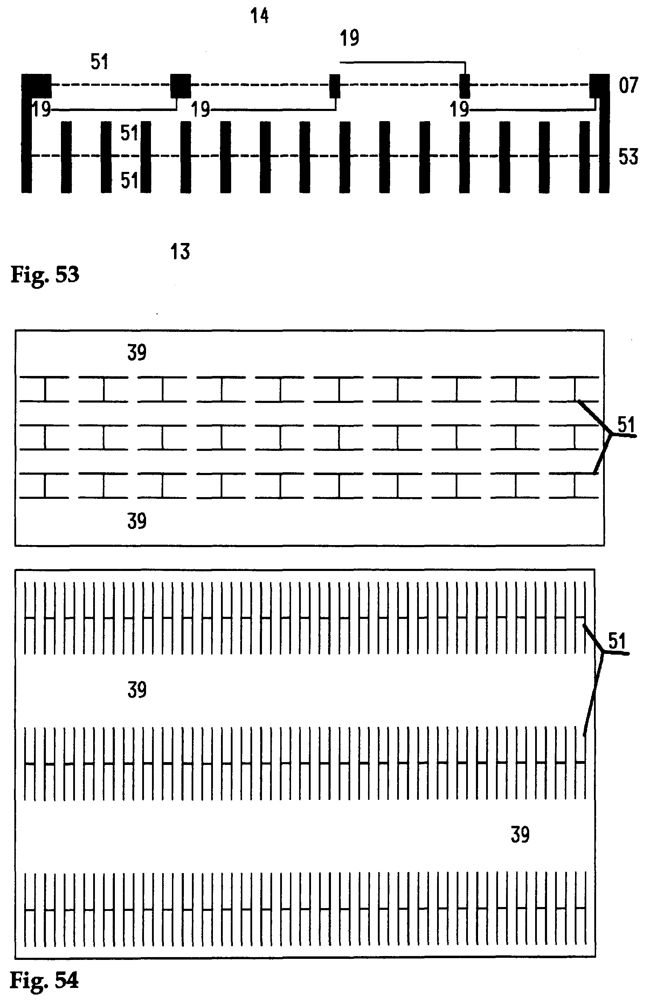

Fig 13. Ein Weg zum Ausführen der beanspruchten Erfindung insbesondere zur Ausformung von Anspruch 2. Schnitt- bzw. Seitenansicht vertikal zur flächigen Ausdehnung des Gebildes. Absorbnetz mit einem Gebilde nach Merkmal 1.c (c), z. B. ein netz- oder gitterartiges Gebilde (37), vor dem einseitig (14) ein flächiges Gebilde mit eingeschnittenen Mustern (07), z. B. aus folien- oder tuchartigem Material, in einer oder mehreren Lagen aufgebracht ist. Das eingeschnittene Material ist dabei in sich beweglich, so daß die Figuren, Merkmal 1.a (a), die eingeschnitten sind, herausklappen können und so bewegliche Enden (19), entsprechend Merkmal 1.a (a), bilden. In dieser Darstellung stehen die losen Enden (19), im Gegensatz zu Fig. 7, senkrecht zu Merkmal 1.c (c), Lage (b2). Die dünnen horizontalen Linien symbolisieren Durchlässe bzw. Öffnungen (51). Dabei sind die Öffnungen (51) von Merkmal 1.c (c) z. B. kleiner als die eingeschnittenen Figuren (a), so daß die Figuren (a, 15) kaum auf die andere Seite (13) gelangen können. Die eine Seite (13) wird so für die betrachtete Sache, z. B. für Teilchen eines bestimmten Größenspektrums, die sich innerhalb eines bestimmten Geschwindigkeitspektrums bewegen, durchlässiger als die andere Seite (14). Von der Seite (13) kann das Gebilde z. B. eine Ansicht ähnlich Fig. 8, 9, 10, 11, 12, 15, 17, 21, 37, 54 oder 55 haben. Aus Blickrichtung (14) ergibt sich eher ein Bild ähnlich z. B. der Vorderansicht in Fig. 52. In Fig. 53 ist z. B. noch eine etwas andere, aber ähnliche Ausführungs- bzw. Darstellungsmöglichkeit veranschaulicht. Bezüglich des Abstandes zwischen Sperrelementen (a, 15) und Haltestruktur (c, 37) vgl. Hinweise bei Fig. 7 dazu.
Fig. 14: Schnitt oder Seitenansicht z. B. zu Fig. 4. Gebilde von Fig. 4 in vereinfachter horizontaler und vertikaler Ansicht. Verwendung der Darstellung symbolisch in anderen Figuren. Auf der einen Seite (d1, 13) befindet sich Merkmal 1.c (c) und auf der anderen Seite (d2, 14) Merkmal 1.a (a) bzw. bewegliche Enden (19).

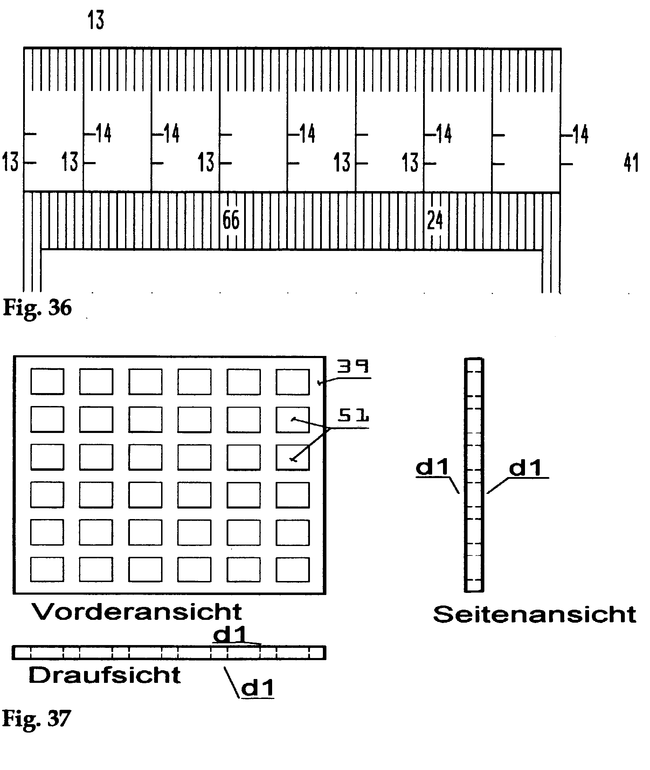

Fig. 15: Darstellung eines gebräuchlichen, von beiden Seiten gleichermaßen durchlässigen Gebildes in einer Perspektive. Es handelt sich um ein sieb-, gitter-, netz- bzw. rostartiges Gebilde, wie es für Merkmal 1.c verwendet werden kann. Eine etwas andere Ausführungs- bzw. Darstellungsform ist dazu in Fig. 37 zu finden.
Fig. 17: Ausführen der Haltestruktur (c, 37), insbesondere zur Ausformung von Anspruch 8 oder 2, wobei die Haltestruktur (c, 37) durch ein, im Bild dargestelltes, flächiges Gebilde, z. B. ein papier- oder pappeartiges Material, in das Muster eingeschnitten sind, realisiert wird. Das dargestellte flächige Gebilde kann dabei, z. B. durch Gewichte, die das Gebilde z. B. durch die darauf wirkende Fallbeschleunigung oder z. B. durch Fliehkräfte spannen, im Verhältnis zu den Sperrelementen (a, 15) relativ starr gestaltet werden. Als Schnittmuster eignen sich weniger offene Muster wie C, E, h, H, <, >, T, M, N, V, W, + oder ähnlich, vgl. Fig. 20, 54 oder 55 dargestellt. Muster die geschlossene Flächen haben, wie O oder D, vgl. auch Fig. 12, sind für Haltestrukturen (c, 37) besser geeignet.
Fig. 18. Ausführen und Anwenden der Erfindung, insbesondere zur Ausformung von Anspruch 8 mit kammartiger Haltestruktur. In der Mitte des perspektivisch dargestellten Gebildes befindet sich ein rotationsfähig gelagertes, vertikal angeordnetes, zylindrisches Gebilde, z. B. ein Mast oder eine Achse. Von dieser Achse gehen horizontal in vier Richtungen zahlreiche Linien, die senkrecht zur Achse stehen, ab. Diese Linien symbolisieren stab- oder röhrenförmige, starre Gebilde, die nebeneinander in vier Ebenen angeordnet mit jeder der vier Ebenen bzw. Flächen jeweils einmal Merkmal 1.c erfüllen. Auf jeweils einer Seite dieser Ebenen sind wellenförmig verlaufene Linien, die bewegliche Gebilde entsprechend Merkmal 1.a symbolisieren. Diese Gebilde entsprechend Merkmal 1.a können z. B. durch fadenartige Gebilde, die jeweils oben und unten durch horizontale stangen- oder röhrenartige Gebilde, die jeweils an der Achse befestigt werden, gehalten werden.
Fig. 19: Siehe dazu auch Erläuterungen zu Fig. 10.
Fig. 20: Ein Bauteil für die Erfindung, insbesondere zur Ausformung von Anspruch 2. Ansicht z.B. aus Richtung auf die durchlässigere (d1, 13) oder undurchlässigere Seite (d2, 14). Ausformung von Sperrelementen (a, 15) und/oder einer Haltestruktur (c, 37). Z. B. ein folienartiges Material, in das bestimmte Muster eingeschnitten oder eingeritzt sind. Zur Herstellung der Muster wird z. B. eine Schneidenwalze, bei der mehrere Messer in entsprechendem Abstand zur Realisierung entsprechender Muster beim Abrollen rotieren, über das flächige Material gerollt. Als Schnittmuster eignen sich, wie dargestellt, offene Muster wie h, H, <, >,T, _, M, N, V, W, x, Y, L, S, + oder ähnlich, sowie Kombinationen aus verschiedenen Mustern besonders zur Realisierung von Sperrelementen(a, 15). Muster die geschlossene Flächen haben, wie O oder D, sind eher für Haltestrukturen (c) geeignet. Die Linien im Rahmen stellen Einschnitte (51), die zu Öffnungen (51) aufklappen können, in der ansonsten undurchlässigen Wandung (39) dar. Jeder Einschnitt kann, z. B. in dem Maße der Biegsamkeit der Folie, als ein oder mehrere schwenkbare Teile (19) bei Verwendung des Bauteils als Sperrelement (a) aufgefaßt werden. In Fig. 20 sind die schwenkbaren Teile in besagter Lage (b1) dargestellt.
Fig. 21: Bauteil zum Ausführen der Erfindung, insbesondere zur Gestaltung von Anspruch 2 oder 8. Vgl. Fig. 8, 9, 10, 11, 12, 17, 19, 20, 37, 54, 55. als Alternative. Zur Verwendung des dargestellten Gebildes für Haltestrukturen (c, 37) ist das Gebilde vorzugsweise aus unflexiblem, z. B. starrem, Material ausgeführt oder alternativ durch Kräfte, z. B. Gewichts- oder Spannkräfte durch die Befestigung, zu spannen, damit dies in sich weitgehend und besonders relativ zu den beweglichen Teilen (19) der Sperrelemente (a, 15) unbeweglich ist. Für Sperrelemente (a, 15) können ähnliche Gebilde verwendet werden, besonders wenn diese aus flexiblem, das heißt z. B. in sich beweglichen Materialien, hergestellt sind, oder wenn diese Gebilde aus starrem Material bestehen und diese Gebilde sich dafür in der Befestigung, vgl. Fig. 6, relativ zur Haltestruktur (c, 37) bewegen können. Als Sperrelement (a, 15) ist das Gebilde vorzugsweise so an oder in unmittelbarer Nähe der Haltestruktur befestigt, daß die undurchlässigen Wandungen (39) die Öffnungen bzw. Durchlässe (51) der Haltestruktur (c, 37) weitgehend verschließen können, wenn die Dinge für die die bedingte Durchlässigkeit erreicht werden soll, von der einen Seite (14), Merkmal 1.d2 (d2), kommen, das heißt wenn z. B. ein strömendes Medium auf die Weniger durchlässige Seite (14), das ist meist die Seite, auf der sich die Sperrelemente (a, 15) befinden, trifft.
Fig. 23. Ein Weg zum Ausführen der Erfindung, besonders zur Ausformung von Varianten nach Anspruch 2, in einer Ansicht aus Richtung der weniger durchlässigen Seite (d2, 14), vgl. Fig. 52. Dabei wird Merkmal 1a bzw. die Sperrelemente (a) z. B. durch folien- oder tuchstreifenartige Gebilde (03) realisiert. Die durchgehenden Linien in der Darstellung deuten sichtbare Kanten an. Alternative Darstellungsweise bzw. Ausführung z. B. zu Fig. 2, 3, 23 bzw. 14. Aus Richtung (d1) ergibt sich z. B. eine ähnliche Ansicht, wie in der Vorderansicht von Fig. 37.
Fig. 24: Ausführen einer Anwendung der Erfindung, insbesondere von Anspruch 4 Durchgezogene Linien im Bild symbolisieren sichtbare Kanten. Unterbrochene Linien symbolisieren unsichtbare Kanten. Die Ansicht ist senkrecht zu der flächigen Ausdehnung bzw. der möglichen Hin- und Herbewegung des Absorbnetzes (01), entsprechend Anspruch 1 (01). Links und rechts ist jeweils eine um den Mittelpunkt (64) drehbare Scheibe (65), an der das bedingt durchlässige Gebilde (01) exzentrisch auf diesen Scheiben (65) und drehbar um die Befestigung (16) gelagert ist, z. B. nach dem Prinzip einer Parallelkurbel. Die Scheiben (65) können dabei auf Wellen sitzen, die in einer herkömmlichen Konstruktion für den Zusammenhalt des Gebildes sorgen und insbesondere die beiden Scheiben auf einen bestimmten Abstand halten, so daß für das Absorbnetz (01) eine Hin- und Herbewegung oder ein Schwingen bzw. eine Vibration entsteht Vorteil: Das Gebilde kann verschiedene Varianten von Anspruch 7 realisieren, das heißt z. B. Teilchen in Bewegung versetzen, wobei diese Bewegung auch eine bestimmte Richtung haben kann. Dazu kann an einer oder beiden Scheiben (65), z. B. direkt oder über deren Wellen (64) ein herkömmlicher Antrieb Kraft auf das Absorbnetz (01) übertragen.
Fig. 25: Ein Weg zum Ausführen der beanspruchten Erfindung, insbesondere zur Verdeutlichung von Anspruch 2, wobei der bewegliche Teil (19) der Sperrelemente (a, 15) kaum bis ganicht durch die Durchlässe (51) der Haltestruktur (c) gelangen kann, in Ansicht senkrecht zur flächigen Ausdehnung des Absorbnetzes (01), der besagten Fläche (c1). Die gestrichelten Linien sollen in dieser Fig. Durchlässe (51) symbolisieren. Auf der Seite von Merkmal 1.d2 (d2, 14) ist dabei eine Fläche z. B. entsprechend Anspruch 2 (07). Auf der Seite von Merkmal 1.d1 (d1, 13) ist dabei z. B. eine Fläche entsprechend Merkmal 1.c (c) in Form von parallelen Lamellen mit Abständen (51). Der bewegliche Teil (19) von Merkmal 1.a (a, 15) kann aufgrund seiner Länge im Verhältnis zur Weite der Durchlässe bzw. Öffnungen (51) von Merkmal 1.c (c) kaum bis gar nicht durch die Durchlässe von Merkmal 1.c gelangen kann.
Fig. 27. Eine Ausführung der Erfindung, besonders zur Verdeutlichung von Anspruch 2, insbesondere mit einfacher bzw. nachezu punktförmiger Befestigung bzw. Verbund der Sperrelemente (a, 15) mit der Haltestruktur (c, 37), links in einer perspektivischen Darstellung bzw. rechts in einer Seiten- oder Schnittansicht, senkrecht zur durchlässigen (d1) bzw. kaum durchlässigen (d2) Seite. Dabei können Sperrelemente (a), auch als Merkmal 1.a (a) bezeichnet, z. B. durch faden-(04) oder fransenartige (05) Gebilde (a, 15) realisiert sein. Das jeweils eine Ende (16) eines Sperrelementes (a) kann nahezu punktförmig (b, 27) an der Haltestruktur (c) befestigt sein, während sich das andere Ende (19) relativ frei bewegen kann, z. B. durch die Anregung einer Strömung oder umher schwirrender Teilchen. Die Bewegungsfreiheit bzw. Schwenkbarkeit (a1) wird z. B. durch die im Verhältnis zur Größe der Sperrelemente (a) kleinen Öffnungen (51) in der Haltestruktur (c) bzw. den nahe zueinander liegenden undurchlässigen Wandungen (39) eingeschränkt. Die einfache punktförmige Befestigung (b, 27) hat den Vorteil, daß die Sperrelemente viel Bewegungsmöglichkeit (a1) haben. Die einfache punktförmige Befestigung kann z. B. durch Knüpfen, Kleben oder Knoten erfolgen. Ein punktförmiger Verbund (b, 27) kann geschaffen werden, wenn z. B. ein Wabenkörper einseitig mit nahe beieinander liegenden Schnitten eingeschnitten aber nicht durch geschnitten wird. Ein Wabenkörper kann z. B. aus streifenartigem Material, das z. B. mäanderförmig gelegt, in bestimmten Abständen mit der benachbarten Windung des Streifen verliebt oder vernäht wird, hergestellt werden. Eine bedingte Durchlässigkeit (d) wird z. B. erreicht, wenn der bewegliche Teil (19) der Sperrelemente (a) so flexibel ist, daß er sich durch die Kraft der Bewegung relativ zum Absorbnetz (01) der Dinge, für die eine bedingte Durchlässigkeit (d), erreicht wird, bewegen läßt. Gleichzeitig sind die beweglichen Teile (19) unflexibel genug gestaltet und stark genug befestigt (b), daß deren eingeschränkte Bewegungsfreiheit (b1, b2), vgl. Merkmal 1.b (b), durch die Kraft der Bewegung der Dinge, für die Merkmal 1.d (d) erreicht wird, nicht aufgehoben wird, indem z. B. die Befestigung sofort reißt oder die beweglichen Teile (19) durch die Öffnungen (51) komplett auf die andere Seite (d1) gedrückt werden. Die Durchlässe bzw. Öffnungen (51) der Haltestruktur (c) haben eine geeignete Form und Größe, daß die Dinge, für die eine bedingte Durchlässigkeit (d) erreicht werden soll, trotz deren Bewegungszustandes im Verhaltnis zum Bewegungszustand des Absorbnetzes (01) hindurch passen. Die Dinge, für die eine bedingte Durchlässigkeit (d) erreicht wird, können z. B. Teilchen eines gasförmigen Medium sein. Bei einigen Varianten, vgl. Fig. 6 können zusätzlich die Durchlässe bzw. Öffnungen (51) der Sperrelemente (a) eine geeignete Form und Größe erhalten, daß die Dinge, für die eine bedingte Durchlässigkeit (d) erreicht werden soll, trotz deren Bewegungszustandes im Verhältnis zum Bewegungszustandes der Sperrelemente (a) hindurch passen. Bewegen sich z. B. die besagten Dinge, z. B. Moleküle, sehr schnell im Verhältnis zu Teilen des Absorbnetzes (01) so werden z. B. die Maße der Durchlässe (51) sehr vielgrößer als die entsprechenden Maße besagter Dinge, z. B. ein vielfaches eines Moleküldurchmessers, gewählt, um eine auffällige Wirkung zu erzielen. Bewegen sich z. B. die besagten Dinge kaum im Verhältnis zu den Teilen des Absorbnetzes (01), so brauchen die Maße der Durchlässe (51) kaum größer als die Maße der besagten Dinge sein, z. B. kaum größer als ein Moleküldurchmesser. Für ähnliche perspektivische Darstellung vgl. Fig. 35. Für weitere mögliche schematische Schnitt- bzw. Seitenansicht vgl. z. B. Fig. 4 oder 5. Aus Richtung der gut durchlässigen Seite (d1, 13) sind auch Ansichten bzw. Varianten ähnlich zu Fig. 8, 9, 10, 15, 20 möglich.

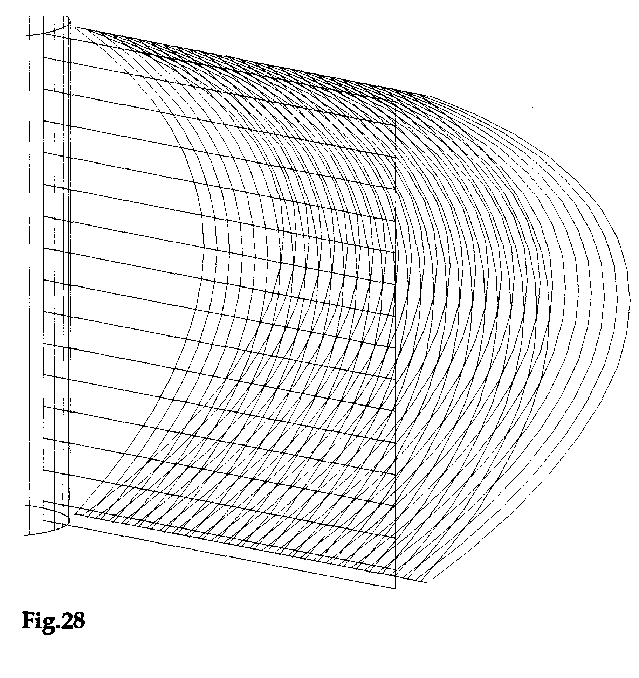

Fig. 28. Eine Ausführen der Erfindung, insbesondre perspektivische Darstellung von Anspruch 2, insbesondere mit zwei bzw. mehreren nahezu punktförmigen Befestigungen der Sperrelemente (a). Eine Einrichtung aus Merkmalen 1.a (a, 15), deren Bewegungsfreiheit (b) eingeschränkt sind, durch jeweils mehrere nahezu punktförmige Befestigungen (28), hier z. B. zwei Festpunkte (28), je einer oben und einer unten. Es entsteht so eine große Schlingenform. Sehr viele nahe punktförmige Befestigungen können Linien oder Flächen von Befestigungen ergeben. Ein weiteres Beispiel einer möglichen Ausformung zu Anspruch 2 ist Fig. 18 zu entnehmen. Merkmal 1.a (a) wird in dieser Darstellung durch bogenförmige Linien symbolisiert, die z. B. durch faden-, seil- oder kettenartige Gebilde realisiert werden. Merkmal 1.c (c) wird in diesem Beispiel durch horizontal verlaufene Linien symbolisiert, die z. B. durch stab- oder rohrartige Gebilde realisiert werden können, die z. B. rechts und/oder links an einer gemeinsamen rohrartigen Führung befestigt und damit auf Abstand gehalten werden können, so daß sich eine gitter-, kamm- oder rostartige Konstruktion für die Haltestruktur (c) ergibt. Vorteil: Mehrere Befestigungen erhöhen die Stabilität der Konstruktion.

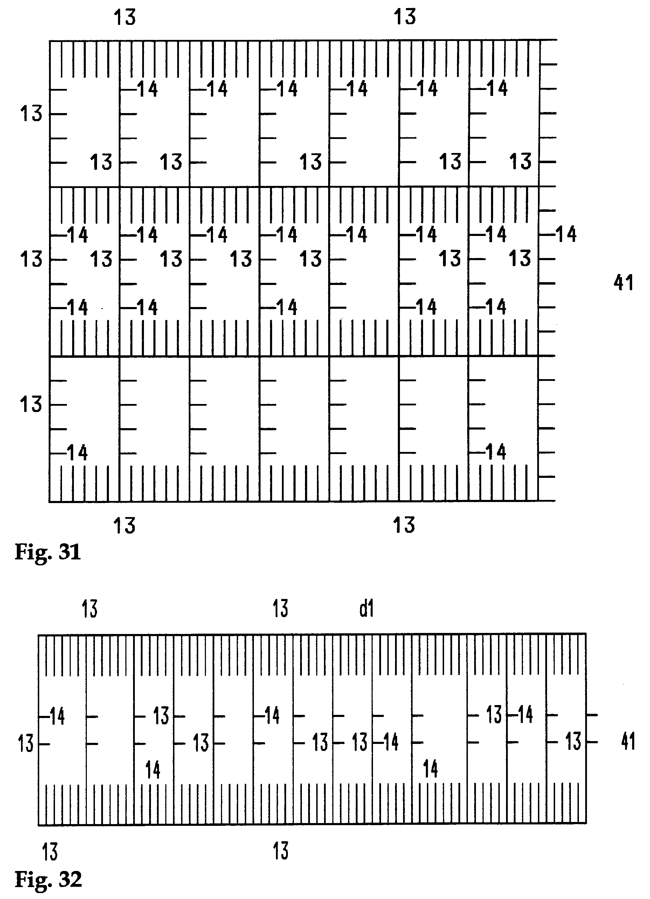

Fig. 31: Ein Weg zum Ausführen der Erfindung, besonders zur Demonstration von Anspruch 6. Die Linien im Fig. symbolisieren Bauteile. Nicht ausgefüllte Flächen symbolisieren leere Räume. Dabei werden mehre Absorbnetze (01) räumlich kombiniert. Die demonstrierte Mehrstufigkeit kann in alle Richtungen des Raumes ausgebildet werden. Die Seiten mit Merkmal (d1, 13) werden dabei jeweils von dem angestrebten Konzentrationspunkt (41) abgewendet und die Seiten mit Merkmal (d2, 14) dem Konzentrationspunkt (41) zugewendet angeordnet. Vgl. dazu besonders auch bei Fig. 32.

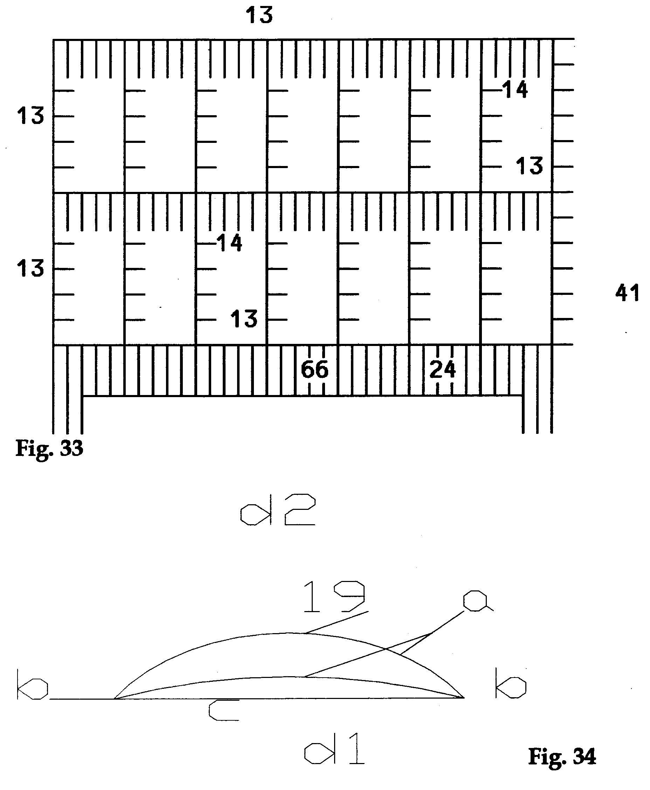

Fig. 32: Ein Weg zum Ausführen der Erfindung, insbesondere zur Demonstration von Anspruch 6. Die Linien im Fig. symbolisieren Bauteile. Nicht ausgefüllte Flächen symbolisieren leere Räume. Schnitt durch ein Gebilde zum Sammeln regellos über schwingend bis strömend sich bewegender Teilchen oder Körper aus allen Richtungen und Ausrichtung der Bewegung oder Ausbreitung des Schwingens in eine bestimmte Richtung (41). Verwendung z. B. als Schlauch, Matte, als Zaun . Wenn z. B. ein solches, dargestelltes Gebilde entsprechenden Anspruch 4. Bestandteil von schwingungsfähigen Konstruktionen wird, so können auch ruhende Teilchen oder Körper in Schwingung mit einer bestimmten Ausbreitungsrichtung (41) versetzt werden. Wenn z. B. ein solches, dargestelltes Gebilde, vgl. Anspruch 4, Bestandteil von Konstruktionen wird, die das Gebilde hin- und herbewegen, so können ruhende Teilchen oder Körper in Schwingung bzw. in einen Strömungs- bzw. Fließzustand mit einer bestimmten Ausbreitungs-, Strömungs- bzw. Fließrichtung (41) versetzt werden. Die Mehrstufigkeit ist in diesem Beispiel wie in Fig. 36 nur in Längsrichtung demonstriert, vgl. auch Fig. 31 bzw. 33.
Fig. 33: Ein Weg zum Ausführen der Erfindung, insbesondere zur Demonstration von Anspruch 6 bzw. 4. Die Linien im Bild symbolisieren Bauteile. Nicht ausgefüllte Flächen symbolisieren leere Räume. Die durchgehend schraffierten Flächen symbolisieren eine geschnittene Wand, die weitgehend starr (66) und/oder undurchlässig (24) sein kann. Beispiel einer mehrstufige Version von Fig. 36. Die demonstrierte Mehrstufigkeit kann in alle Richtungen des Raumes ausgebildet werden. Die undurchlässige Wandung kann z. B. die Wand eines Gebäudes und/oder das Erdreich sein, auf dem die Konstruktion steht. Das Beispiel ist mehrstufig, vgl. Fig. 36. Das Beispiel demonstriert Absorbnetze (01) an einer starren Konstruktion (66), vgl. Anspruch 4. Im übrigen können hier die Bemerkungen zu Fig. 31 und 32 entsprechend hinzugezogen werden.
Fig. 34. Ein Weg zum Ausführen der Erfindung, besonders zum Ausformen von Anspruch 2 mit von der Haltestruktur abstehenden Sperrelementen (a, 15), die im dargestellten Moment die besagte zweite Lage (b2, 35) einnehmen. Die Ansicht ist in der Ebene, senkrecht zur flächigen Ausdehnung des Gebildes. Anliegend, vgl. Fig. 25, würder heißen, daß Merkmal (a) im unbelasteten Zustand mehr oder weniger parallel zur flächigen Ausdehnung des Merkmales (c) liegt und damit vorzugsweise die besagte erste Lage (b1) einnehmen würde. Sperrelemente (a) sind hier an jeweils zwei Stellen (b) an einem herkömmlichen flächigen, durchlässigen Gebilde (c), z. B. in Form eines Rostes, befestigt und dadurch an diesen Stellen relativ unbeweglich. Zwischen den befestigten Stellen sind diese Gebilde (a) beweglich bzw. weisen eine Schwenkbarkeit (a1) auf, und bilden damit jeweils ein loses Ende (19). Die Bewegungsfreiheit (b) der losen Enden (19) wird durch die Haltestruktur (c), z. B. einem herkömmliche flächige, durchlässige Gebilde (37), so beschränkt (b), daß die losen Enden (19) fast ausschließlich auf der einen Seite (d2) ihre Bewegungen ausführen können. Die Durchlässigkeit kann z. B. durch Öffnungen (51), aber auch vgl. Anspruch 8 realisiert werden. Merkmal (a) kann hier z. B. durch ein oder mehrere Lagen von herkömmlichen, aber leicht beweglichen Netzen realisiert werden, vgl. Fig. 6. Eine Andere Möglichkeit wäre die Realisierung durch von rechts nach links bzw. umgekehrt verlaufenen faden-, fransen- oder streifenartige Gebilde. In Fig. 10, 11, 12, 15, 17 sind zum Beispiel Elemente aus der Richtung (d1) gezeigt, die hier für Merkmal 1.c (c) eingesetzt sein könnten. Der Vorteil des Gebildes besteht darin, daß eine relativ durchlässige Seite (d1) und eine relativ undurchlässige Seite (d2) entsteht. Die Durchlässigkeit kann sich je nach Bemessung der Maße auf Körper, z. B. Fische, Teilchen, z. B. Moleküle oder Ionen, Schwingungen und Strahlung beziehen. Entsprechende Dinge, auf die sich diese bedingte Durchlässigkeit (d) bezieht, können ausgesondert bzw. gesammelt werden. Die durchlässige Seite (d1) ist gegenüber Fig. 35 erst bei Vorhandensein einer gewissen Mindestkraft durchlässiger als die andere Seite (d2). Damit die weniger durchlässige Seite (d2) undurchlässiger wird ist eine geringere Kraft als bei Ausformung vgl. Fig. 35 notwendig. Verwendung des dargestellten Gebildes z. B. in Fig. 44.
Fig. 35: Ein Weg zum Ausführen der Erfindung, besonders zum Ausformen von Anspruch 2 Sperrelemente bzw. Merkmal 1.a (a) wird in Form von faden- oder fransenförmigen, beweglichen bzw. schwenkbaren Gebilden (a, 04), ähnlich Fig. 4, 5 oder 27, in einer perspektivischen Sicht gezeigt, wobei die Sperrelemente (a, 15) von der Haltestruktur (c) abstehen bzw. die besagte zweite Lage (b2, 35) einnehmen. Es bedeuten: Befestigung, die die Bewegungsfreiheit einschränkt (b, 16); leichter durchlässige Seite, bzw. Merkmal (d1, 13); schwerer durchlässige Seite, bzw. Merkmal (d2, 14), fadenähnliches, bewegliches Gebilde (04), bzw. Merkmal (a); undurchlässige Wandung mit Öffnungen (51), wobei die Öffnungen hier z. B. einen rechteckigen Querschnitt aufweisen. Vorteil: Die durchlässige Seite (d1) ist gegenüber Fig. 34 wesentlich durchlässiger, d. h. für die Durchlässigkeit ist weniger Kraft der durchtretenden Teile erforderlich. Damit die weniger durchlässige Seite (d2) undurchlässiger wird, reicht eine geringere Kraft des durchtretenden Medium als bei Ausformung entsprechend Fig. 25 oder Fig. 34 notwendig. Mehr rechts (d1) mit Trägerlage (c), z. B. ein gitter- oder netzartiges Gebilde. Mehr links fadenähnliches Gebilde (04) mit jeweils einem beweglichen Teil (19). Die fadenartigen Gebilde (04) sind vorzugsweise länger als die größte Ausdehnung des Abstandes zwischen den undurchlässigen Wandungen (51) bzw. der Öffnung (51). Die undurchlässigen Wandungen werden zur Verringerung des Widerstandes bei der Durchlässigkeit von der einen Seite (d1) auf ein Maß reduziert, daß gerade die Stabilität des Gebildes, möglicherweise auch die Unbeweglichkeit von Merkmal (c), sicherstellt. In Fig. 4 ist ein möglicher schematisch vereinfachter Schnitt bzw. eine Ansicht senkrecht zur flächigen Ausdehnung des Gebildes. Vgl. z. B. Fig. 44 für ein Beispiel zum Anwenden des dargestellten.
Fig. 36: Ein Weg zum Ausführen der Erfindung, besonders zur Demonstration von Anspruch 6 bzw. 4. Schnitt durch ein Gebilde, das z. B. zum Sammeln von regellos über schwingend bis strömend sich bewegende Teilchen oder Körpern und Ausrichtung der Bewegung oder Ausrichten der Ausbreitung des Schwingens in eine bestimmte Richtung, entsprechend Anspruch 7 verwendbar ist Die Ansicht ist vertikal zur flächigen Ausdehnung der Bauteile. Verwendung z. B. als Verkleidung undurchlässiger Wandungen (24) von Immobilien oder Mobilen oder Boden- oder Gebirgsformationen. Als einstufig könnte das Gebilde in Richtung starrem Gebilde (66), d. h. von oben nach unten, bezeichnet werden, während es in Längsrichtung eher als mehrstufig bezeichnet werden könnte. Mehrstufig bedeutet hier z. B., daß mehrere Gebilde nach Anspruch 1 gleichsinnig hintereinander angeordnet werden. Einstufig bedeutet z. B., daß auch nur ein Gebilde nach Anspruch 1 (01) angeordnet werden kann. Im übrigen gilt die Beschreibung zu Fig. 33 entsprechend. Die Größenverhältnisse können auch anders als abgebildet sein. Die losen Enden (19) auf der einen Seite (14) berühren dabei möglichst nicht die undurchlässige Wandung (24) oder die andere Seite (13) der nächsten Stufe, soweit dies erforderlich ist, die freie Beweglichkeit der Sperrelemente (15) sicher zu stellen.
Fig. 37: Ausführungsvariate für Merkmal (c). Oben links eine mögliche Vorderansicht, rechts daneben dazu eine mögliche Seitenansicht, darunter dazu eine mögliche Draufsicht. In Fig. 15 ist dazu eine perspektivische Darstellung eines netz-, sieb- oder gitterartigen Gebildes, das Merkmal (c) erfüllen könnte. Die dargestellten Gebilde sind von jeder Seite gleichermaßen durchlässig, entsprechend Merkmal (d1) bzw. 1.c2. Die Durchlässigkeit entsteht für die betrachtete Sache, z. B. für ein strömendes oder schwingendes Medium oder für sich bewegende Teilchen, durch die Durchlässe bzw. Öffnungen (51), während undurchlässige Wandungen (39) die beweglichen Teile von Merkmal (a) auf einer Seite des Gebildes zurückhalten. Wird das dargestellte Gebilde bewegt, so entsteht z. B. auch eine Durchlässigkeit, entsprechend Merkmal (c2) bzw. Merkmal (d1), für ruhende Medien bzw. Teilchen. Die Größenverhältnisse können anders als dargestellt gewählt werden.

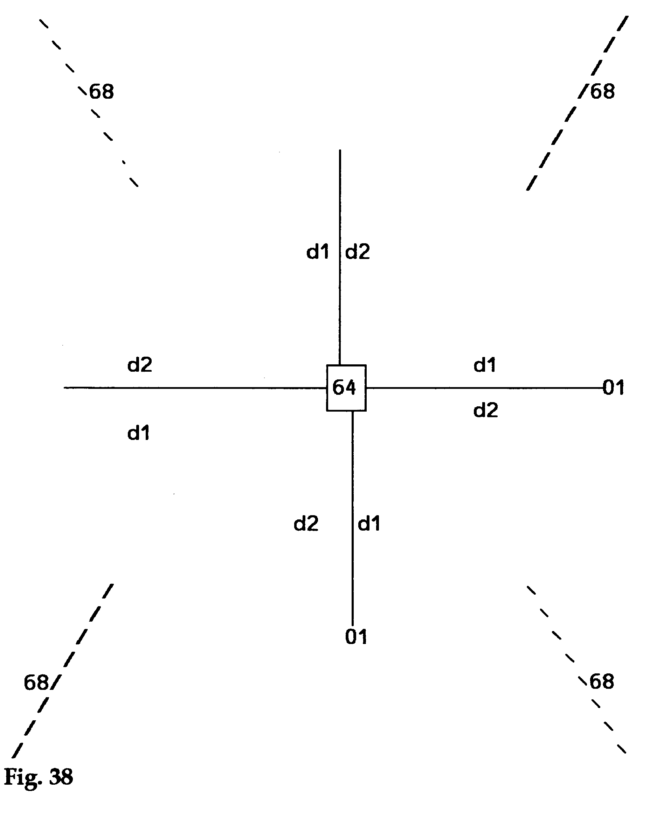

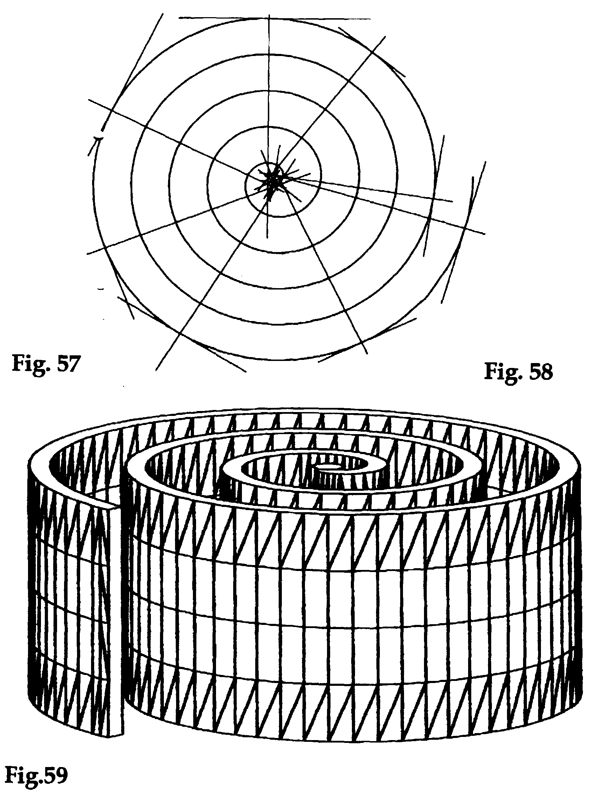

Fig. 38: Schematisches Beispiel für die Gestaltung der Erfindung, besonders von Anspruch 10 mit Kombination mit statischen Gebilde (68). Die Linien im Bild symbolisieren Bauteile. Die Ansicht ist senkrecht zu den flächigen Ausdehnungen der dargestellten Bauteile. Anordnung analog Fig. 57, wobei Flächen (68) angebracht sind, um die Wirkung der sich um den Mittelpunkt (64) drehenden Teile zu erhöhen, Anbringen der Flächen (68) in einem Abstand zueinander, der den bewegten Flächen (01) ein ungehindertes Drehen erlaubt, insbesondere ohne an die relativ dazu ruhenden Flächen (68) anzustoßen. Es sind in diesem Beispiel vier Flächen (01) mit den Merkmalen (d1, 13) und Merkmalen (d2, 13) drehbar an ein mast- oder achsen- bzw. wellenartiges Gebilde (64) in etwa gleichen Winkeln zueinander und etwa gleicher Größe angebracht. Die Flachen (68) sind in Bezug auf die drehenden Flächen (01) in Ruhe. Bei den ruhenden Flächen (68) kann es sich z. B. um segel- oder wandartige Flächen, um Gebäude oder Bodenformationen bzw. Gebirgsformationen handeln. Die Flächen (68) sind relativ zu den rotierenden Teilen fest stehend, soll heißen, daß diese Flächen (68) in Zusammenhang mit den Flächen (01) auch beweglich sein können, insbesondere wenn die ganze dargestellte Konstruktion z. B. der Aufbau eines Mobiles ist. Desweiteren ist es sinnvoll, die Flächen (68) auf die Hauptrichtung, aus der die Dinge kommen, für die Merkmal (d) erreicht wird, auszurichten, um bei geringerem Materialaufwand die Effektivität zu steigern. Diese Möglichkeit ist insbesondere bei Verwendung von drei Flächen (68) interessant, die etwa im gleichen Winkel zueinander angebracht werden und etwa gleich groß sein können. Als besonders vorteilhaft haben sich Anordnungen mit fünf und mehr relativ unbewegten Flächen (68) herausgestellt. Die bewegten Flächen (01) stellen Absorbnetze dar. Verwendung des Dargestellten z. B. entsprechend Anspruch 7.

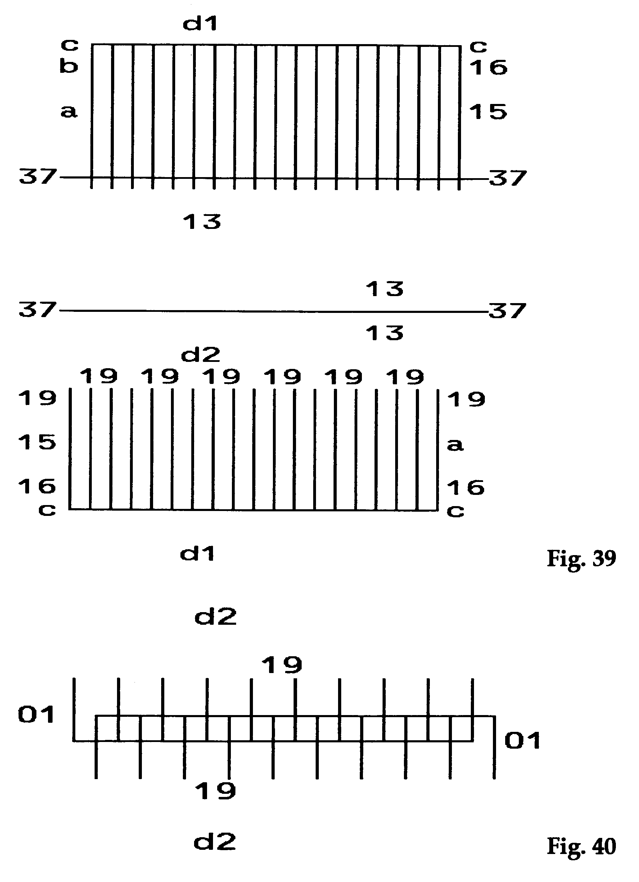

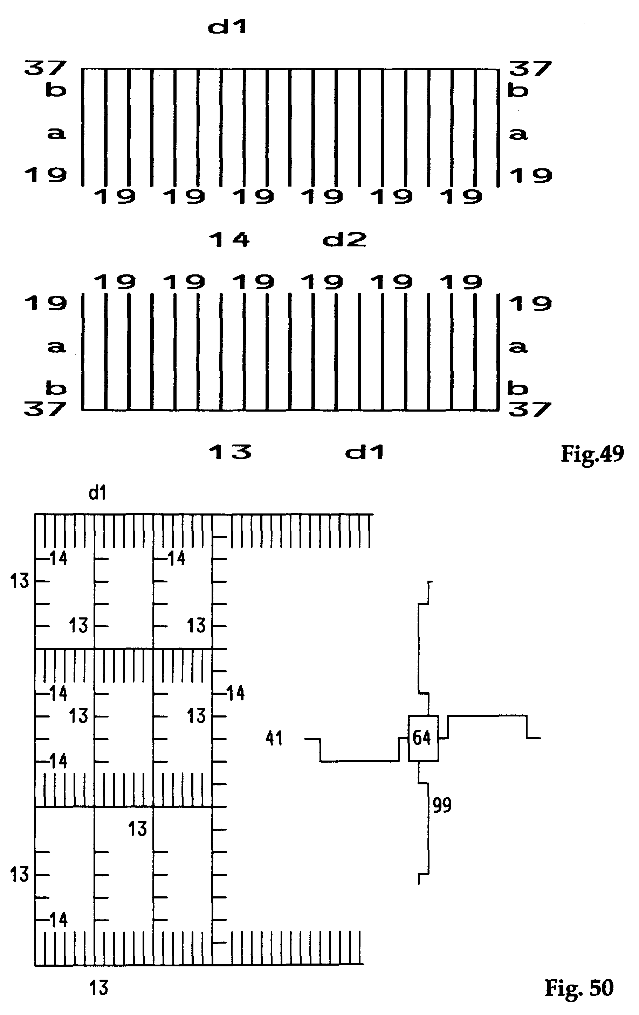

Fig. 39: Ein Weg zum Ausführen der Erfindung, besonders um zu zeigen wie ein Steuerungsmechanismus folglich Anspruch 6 verwirklicht wird. Die Linien im Bild symbolisieren Bauteile. Nicht ausgefüllte Flächen symbolisieren leere Räume. Die Ansicht ist senkrecht zur flächigen Ausdehnung der dargestellten Gebilde. In der Anordnung analog Fig. 49, wobei zusätzlich durchlässige, flächige Gebilde (37), z. B. netz-, rost-, sieh oder gitterartige Gebilde, z. B. zur Beeinflussung der Durchlaßrichtung angeordnet werden. Ganz unten im Fig. ist ein Absorbnetz (01), mit den schwenkbaren Enden (19) des Merkmals (a, 04), das auf der anderen Seite fixiert (16) ist. Die Fixierung (16) erfolgt z. B. direkt an Merkmal (c). Darüber ist ein herkömmliches durchlässiges Gebilde (37) mit etwas Abstand zu dem unteren Gebilde. Diese beiden unteren Gebilde zusammen ergeben das Merkmal (d), mit dem Merkmal (d1) auf der Seite von Merkmal (c) und dem Merkmal (d2) auf der Seite von Merkmal (a). Oben im Fig. wird gezeigt, wie das durchlässige Gebilde (37) an Merkmal (a) durch eine herkömmliche Konstruktion herangeführt wurde, so daß die Bewegungsfreiheit der beweglichen Enden (19) auf das Spiel in den Durchlässen von Gebilde (37) reduziert wird, so daß es die beweglichen Enden kaum noch wirksam werden können, weil sie nahezu festgesetzt sind. Der Vorteil ist daß das Gebilde damit eine durchlässige Seite (13) bekommt, wo ansonsten eine wenig durchlässige Seite (d2) wäre. Das Gebilde (37) kann z. B. entsprechend Fig. 37, 8, 10, 11, 12, 15, 17, 19, 20, 21 ausgeführt werden und wird z. B. an einen Mechanismus gekoppelt, der dieses an eine Ausführungsform von Merkmal (a) heranführen kann. Besonders effektiv ist die Steuerung, wenn mehrere Lagen von Gebilde (37) eingesetzt werden. Jede dieser Lagen kann die gleiche Form und Größe der Durchlässe haben. Soll Merkmal (d2) aktiviert sein, so können alle Lagen durch einen Mechanismus so übereinander gebracht werden, daß jeweils jede undurchlässige Wandung und jeder Durchlaß übereinander liegt. Soll Merkmal (d2) deaktiviert werden, so werden die Lagen an Merkmal (a) herangeführt, die beweglichen Enden (19) in die Durchlässe der Lagen eingeführt und die Lagen von Gebilde (37) so gegeneinander verschoben, daß die beweglichen Enden (19) eingeklemmt werden. Insbesondere die Verwirklichung von Anspruch 3 und 5 kann analog erfolgen.
Fig. 40: Ein Weg zum Ausführen der Erfindung, insbesondere zur Demonstration von Anspruch 3. Die Linien im Bild symbolisieren Bauteile. Nicht ausgefüllte Flächen symbolisieren leere Räume. Die Ansicht ist senkrecht zur flächigen Ausdehnung der dargestellten Gebilde. Anordnung z. B. wie bei Anspruch 6, wobei eine Seite des Absorbnetzes (01) auf die andere bzw. beide Seiten stärker, z. B. durch einen geeigneten herkömmlichen Mechanismus, aufeinanderzu bewegt wurden, so daß das Gebilde von beiden Seiten den Charakter von Merkmal 1.d2 (d2) erhält. Die beweglichen Enden (19) der Sperrelemente (a, 15) werden dabei durch den Mechanismus durch Merkmal 1.c2 (c2, 38), d. h. durch die Durchlässe (38) bzw. Öffnungen (38) so weit durchgeführt, daß diese sich auf der jeweils anderen Seite, vorher mit dem Merkmal 1.d1 (d1, 13) behaftet, so bewegen können, daß diese nicht ohne weiteres auf die andere Seite getrieben werden können. Für die erforderliche Einfädelung der Sperrelemente (a, 15) des jeweils einen Absorbnetzes (01) in die Durchlässe (c2, 38, d2) des anderen Absorbnetzes (01) sind die entsprechenden Maße aufeinander abgestimmt. Die losen Enden (19) sind dazu vorzugsweise mindestens so starr, daß sie in relativ ruhender Umgebung von der Haltestruktur (c, 37) abstehen, entsprechend Lage (b2).

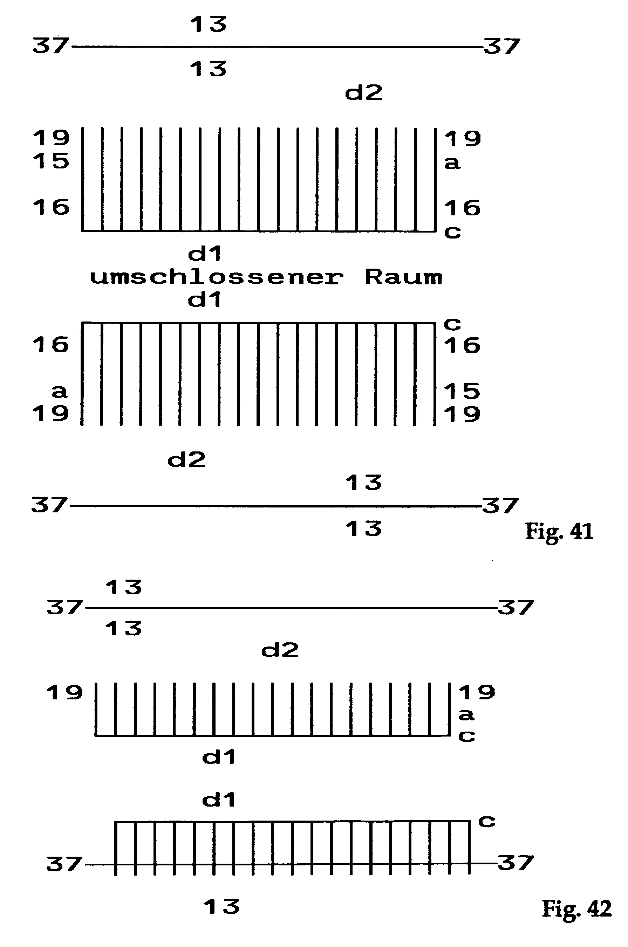

Fig. 41: Ein Weg zum Ausführen der Erfindung, insbesondere zum Ausformen von Anspruch 3 und/oder 5 und/oder 6 in einem Schnitt oder einer Seitenansicht vertikal zur flächigen Ausdehnung des Gebildes. Die Linien im Bild symbolisieren Bauteile. Nicht ausgefüllte Flächen symbolisieren leere Räume. Realisierung z. B. durch Kombination von Anspruch 1, auch als Absorbnetz (01) bezeichnet, mit herkömmlichen durchlässigen, flächigen Gebilden (37), wie z. B. netz- oder gitterartigen, flächigen Gebilden, wie z. B. dargestellt in Fig. 37. Verwendung z. B. um einen Raum abzutrennen oder ganz oder teilweise zu umschließen, vgl. Anspruch 6 bzw. Fig. 43. Anordnung wie bei Anspruch 6, wobei an dem Gebilde herkömmliche durchlässige, flächige Gebilde (37), z. B. netz-, rost-, sieh oder gitterartige Gebilde, z. B. zur Beeinflussung der Durchlaßrichtung angeordnet werden. Ganz unten im Fig. ist ein durchlässiges (13) Gitter- oder Kammgebilde (37) mit etwas Abstand zu dem Gebilde darüber dargestellt. Dieses Bauteil ist erfindungsgemäß mit einer Mechanik verbunden, durch die dieses Bauteil auf das darüber dargestellte Bauteil zubewegt wird kann, mit dem Ergebnis wie in Fig. 42 schematisiert Darüber im Fig. ist ein Absorbnetz (01), mit den beweglichen Enden (19) von Sperrelementen (a), die auf der anderen Seite fixiert (16) sind. Die Fixierung (16) erfolgte in Fig. 41 direkt an der Haltestruktrur (c, 37). Diese beiden unteren Gebilde zusammen ergeben die bedingte Durchlässigkeit (d), mit dem Merkmal (d1, 13) auf der Seite von Merkmal (c) und dem Merkmal (d2, 14) auf der Seite von Merkmal (a, 15). In Fig. 42 ist das gleiche Gebilde mit verändertem Abstand eines netzartigen Gebildes (37) zu dem Absorbnetz (01). Die Verwendungsmöglichkeiten des Dargestellten entsprechen z. B. denen des Anspruches 6 bzw. des Fig. 43.
Fig. 42: Anordnung wie Fig. 41 in dem Zustand, daß der Abstand auf der einen Seite bzw. Fläche der Anordnung des Gitter- oder Kammgebilde (37) zu dem Absorbnetz (01), bzw. dessen mit den Sperrelementen (a) ein Maß einnimmt, bei dem diese Seite bzw. Fläche für regellos über schwingend bis strömend sich bewegenden Teilchen oder Körper beidseitig leicht durchlässig ist. Ansicht bzw. Schnitt senkrecht zu durchlässigeren (d1, 13) bzw. weniger durchlässigen Seite (d2, 14). Unten im Fig. wird gezeigt, wie das durchlässige Gebilde (37) an Sperrelemente durch eine herkömmliche Konstruktion herangeführt wurde, so daß die Bewegungsfreiheit der beweglichen Enden (19) auf das Spiel in den Durchlässen von Gebilde (37) reduziert wird, so daß es die beweglichen Enden im Idealfall praktisch nicht mehr gibt, weil sie festgesetzt sind. Der Vorteil ist daß das Gebilde damit eine durchlässige Seite (13) bekommt, wo ansonsten eine wenig durchlässige Seite (d2) wäre. Das Gebilde (37) kann z. B. entsprechend Fig. 37, 8, 10, 11, 12, 15, 17, 19, 20, 21 ausgeführt werden und wird z. B. an einen Mechanismus gekoppelt, der dieses an eine Ausführungsform von Merkmal 1.a (a) heranführen kann. Die Durchlässe des Gebildes (37) sollen in diesem Beispiel so auf die Form und Größe der beweglichen Enden (19) abgestimmt sein, das diese Enden (19) durch die Durchlässe bzw. Öffnungen passen. Besonders effektiv ist die Steuerung, wenn mehrere Lagen von Gebilde (37) eingesetzt werden. Jede dieser Lagen kann die gleiche Form und Größe der Durchlässe haben. Soll Merkmal 1.d2 (d2) aktiviert sein, so können alle Lagen durch einen Mechanismus so übereinander gebracht werden, daß jeweils jede undurchlässige Wandung und jeder Durchlaß übereinander liegt. Soll Merkmal 1.d2 (d2) deaktiviert werden, so werden die Lagen an Merkmal 1.a (a) herangeführt, die beweglichen Enden (19) in die Durchlässe der Lagen eingeführt und die Lagen von Gebilde (37) so gegeneinander verschoben, daß die beweglichen Enden (19) eingeklemmt werden.
Fig. 43: Ein Weg zum Ausführen der beanspruchten Erfindung, insbesondere zur Ausformung von Anspruch 6. Ansicht bzw. Schnitt vertikal zur flächigen Ausdehnung des Gebildes. Die Linien im Bild symbolisieren Bauteile. Nicht ausgefüllte Flächen symbolisieren leere Räume. Dabei sind die gut durchlässigen Seiten (13) bzw. Merkmal 1.d1 (d1) der Gebilde einander bzw. dem umschlossenen Raum zugewandt, während die weniger durchlässigen Seiten bzw. Flächen (14) bzw. Merkmal 1.d2 (d2) vom eingeschossenen Raum abgewandt sind und z. B. einen Schlauch oder eine Säule beliebig geformten Querschnitts bilden. Ein Raum kann mit einem oder mehreren Absorbnetzen (01), vgl. z. B. Fig. 1, 2, 3, 4, 5, 6, 7, 13, 14, 23, 24, 25, 27, 28, 29, 34, 35, 52, oder 53, abgetrennt oder ganz oder teilweise umschlossen werden. Vorteil: Dabei wird die Schwingung bzw. die Bewegung bzw. der Druck bzw. die Zahl der Teilchen für die eine bedingte Durchlässigkeit (d) besteht im Inneren die Tendenz aufweisen, sich zu verringern auf ein Maß, das geringer ist als in der Umgebung. Verwendung hat das Dargestellte z. B. für den Austritt gasförmiger oder flüssiger Medien, z. B. für Abgas, das im umschlossenen Raum von rechts oder links in der Abbildung kontinuierlich eingebracht werden kann und über die Wandung bzw. über eines der beiden dargestellten Gebilde, oben bzw. unten, entsprechend einem Absorbnetz bzw. einer Kombination der abhängigen Ansprüche abströmen kann. Eine etwa vorhandene Strömung außerhalb des umschlossenen Raum behindert aufgrund der dargestellten Konstruktion den Austritt des Mediums im umschlossenen Raum nicht, sondern unterstützt das Austreten sogar. Das Dargestellte kann auch mehrstufig, z. B. analog zu Fig. 31, 32, 33, 36 ausgeführt werden.
Fig. 44: Ein Weg zum Ausführen der Erfindung, insbesondere zur Kombination von Anspruch 2 und 4. Schema in einer Ansicht senkrecht zur flächigen Ausdehnung des Gebildes. Kombination von Fig. 34 und Fig. 57. Merkmal 1.a (a) wirrd in Fig. 44 in Form von faden- oder fransenförmigen, beweglichen Gebilden (04) bzw. Merkmal 1.a (a) an einem Gebilde gezeigt, das um den Mittelpunkt (64) drehbar gelagert ist. An dem zylindrischen Körper in der Mitte (64) sind vier Absorbnetze befestigt. Vor dem Merkmal 1.c (c) ist dabei eine Vielzahl von Sperrelementen (04) bzw. (a). Es bedeuten: Befestigung, die die Bewegungsfreiheit einschränkt (b), z. B. rechts und links, leichter durchlässige Seite, Merkmal 1.d1 (d1), unten im Bild, schwerer durchlässige Seite, Merkmal 1.d2 (d2), oben im Bild, fadenartiges, bewegliches bzw. schwenkbares Gebilde (04), bzw. Merkmal 1.a (a). In Fig. 47 ist dazu eine mögliche Sicht auf die flächige Ausdehnung des Gebildes. Vgl. auch die Ausführungsform, wie beschrieben bei Fig. 57, insbesondere zu Anspruch 4.
Fig. 45: Ein Weg zum Ausführen der beanspruchten Erfindung, insbesondere zur Ausformung von Anspruch 10, in einem stark vereinfachten Schema in einer Ansicht senkrecht zur flächigen Ausdehnung des Gebildes. Die Linien im Bild symbolisieren Bauteile. Nicht ausgefüllte Flächen symbolisieren leere Räume. Dargestellt sind drei Gebilde, die sich um ihren Mittelpunkt jeweils gegenläufig zu ihrem Nachbargebilde in bestimmter Richtung drehen. Jedes dieser sich drehenden Gebilde weist von seinem Mittelpunkt ausgehend jeweils acht bedingt durchlässige Gebilde nach Anspruch 1, z. B. ausgeführt nach Fig. 1 oder 2, auf. Die bedingt durchlässigen Gebilde eines sich drehenden Gebildes sind teilweise mit denen des benachbarten drehbaren Gebilde verzahnt. In Fig. 46 ist eine entsprechende aber etwas andere Darstellungs- bzw. Ausführungsform dazu. In Fig. 47 ist eine mögliche Ansicht eines der drehbaren Gebilde auf die flächige Ausdehnung.
Fig. 46: Ein Weg zum Ausführen der beanspruchten Erfindung, zeigt besonders Ausformung von Anspruch 10, in einer Sicht serierecht zur flächigen Ausdehnung des Gebildes. Die Linien im Bild symbolisieren Bauteile. Realisiert z. B. durch Verzahnung von zwei um den Mittelpunkt (64) drehbar gelagerten Gebilden nach Anspruch 4. Vgl. zur Verdeutlichung Fig. 45. Die Linien im Bild symbolisieren Bauteile. Für die Konstruktion der beiden kombinierten drehbar gelagerten Gebilde vgl. auch die Hinweise bei Fig. 57, 58, 59.
Fig. 47: Ein Weg zum Ausführen der Erfindung, insbesondere mit der Ausformung von Anspruch 4, wobei zwei oder mehr Absorbnetze (01), vgl. z. B. Fig. 35, an einer beweglichen Konstruktion angebracht werden. Ansicht senkrecht zur Rotationsebene des Gebildes. Vgl. dazu auch die Beschreibung zu Fig. 44 oder 57. Rechts ist eine rechteckige, helle Fläche mit schwarzen Flecken, die eine mögliche Sicht auf Merkmal 1.d1 (d1, 13) zeigt, wenn aus Richtung des Betrachters eine starke Strömung in voller Breite auf das dargestellte trifft. Im Vordergrund sind Elemente der Haltestruktur (c), z. B. netzartig vgl. Fig. 8 oder kammartig mit Sprossen. Sprossenartigen Gebilde, z. B. in Form von Röhren oder Stangen, können quer durch einen Zylinder, der Achse, Welle oder dem Mast, auf die linke Bildseite durchgezogen sein. Die Struktur ist nicht klar erkennbar, weil die Größe des Gebildes groß ist im Verhältnis zur Struktur der Haltestruktur (c, 37). In der Linken Bildhälfte ist Merkmal 1.d2 (d2, 14) im Vordergrund und infolge dessen Sperrelemente (a, 15), in der Summe hier als schwarze, d. h. undurchsichtige Fläche, weil die Sperrelemente durch die Strömung umgeknickt sind und die besagte erste Lage (b1). Das Absorbnetz wird dabei z. B. so undurchlässig, daß auch kein Licht, z. B. in Form von Photonen, hindurchtreten kann. Im hellen Rechteck nehmen die Sperrelemente (a, 15) dagegen besagte zweite Lage (b2) ein, stehen z. B. senkrech von der Haltestruktur ab und lassen so das Licht hindurch. Zwischen dem hellen und dem schwarzen Rechteck befindet sich z. B. die Achse (64), die hier etwa bis auf eine Strichstärke reduziert dargestellt ist. Die Achse(64) wird z. B. am unteren oder oberen Ende drehbar gelagert befestigt. Auf und unter dem Gebilde können, senkrecht zur dargestellen Ebene je eine, vorzugsweis kreisförmige, Platte sein, die ebenfalls als Absobnetz (01), entsprechend z. B. Fig. 35, ausgeführt sein können, hier durch gezackte Linien am oberen und unteren Rand des Gebildes dargestellt. Diese Platten können an der Drehachse (64) fest- oder drehbar befestigt sein. Sind die Platten, auch als Unterteller vgl. Fig. 58 mit den dort beschriebenen Varianten ausführbar, mit der Achse (64) drehbar verbunden, so können diese mit der Umgebung, z. B. rechts und links, verbunden werden, um dem Gebilde halt zu geben.

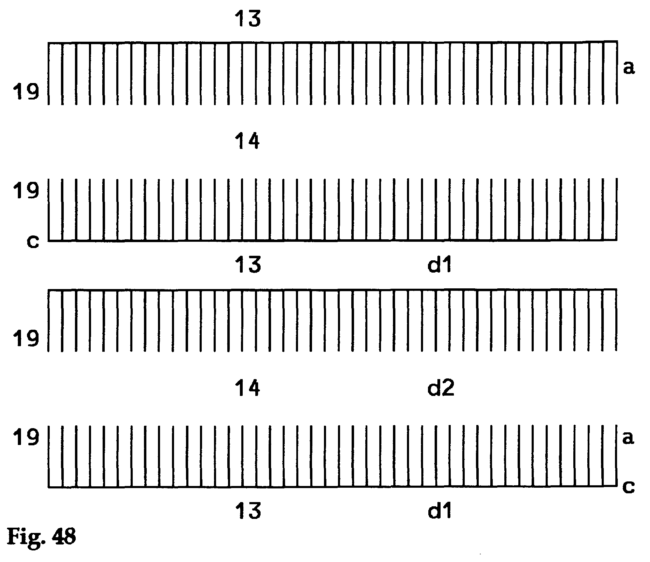

Fig. 48: Ein Weg zum Ausführen der beanspruchten Erfindung, insbesondere zur Ausformung von Anspruch 5, in einem stark vereinfachten Schema in einer Ansicht senkrecht zur flächigen Ausdehnung des Gebildes. Die Linien im Bild symbolisieren Bauteile. Nicht ausgefüllte Flächen symbolisieren leere Räume. Anordnung ähnlich Fig. 41 bzw. 39, wobei jedoch die herkömmlichen durchlässigen Gebilde (37) durch Gebilde nach den Ansprüchen ersetzt sind. Es entstehen auf allen Seiten des umschlossenen oder abgetrennten Raumes Anordnungen entsprechend Fig. 49. In der Mitte entsteht dagegen eine Anordnung entsprechend Fig. 43. Vorteil: Wenn diese die Flächen durch eine herkömmliche Mechanik verbunden werden, durch die diese Fläche aufeinander zu bewegt werden können, können auf zwei Seiten in dem Bild Anordnungen wie in Fig. 40 und damit vielfältige Steuerungsmöglichkeiten entstehen.
Fig. 49: Ein Weg zum Ausführen der Erfindung, insbesondere zur Demonstration von Anspruch 6. Ansicht bzw. Schnitt vertikal zur flächigen Ausdehnung des Gebildes. Die Linien im Bild symbolisieren Bauteile. Nicht ausgefüllte Flächen symbolisieren leere Räume. Dabei sind die gut durchlässigen Seiten (13) bzw. Merkmal 1.d1 (d1) der Gebilde einander bzw. dem umschlossenen Raum abgewandt, während die weniger durchlässigen Seiten bzw. Flächen (14) bzw. Merkmal 1.d2 (d2) dem eingeschossenen Raum zugewandt sind und z. B. einen Schlauch oder eine Säule beliebig geformten Querschnitts bilden. Damit wird eine analoge Umkehrung zu Fig. 43 beschrieben. Entsprechend dem dargestellten Gebilde kann ein Raum mit Absorbnetzen, entsprechend Anspruch 1(01), vgl. z. B. Fig. 1, 2, 3, 4, 5, 6, 7, 13, 14, 23, 24, 25, 27, 28, 29, 34, 35, 52, oder 53, abgetrennt oder ganz oder teilweise umschlossen werden. Vorteil: Dabei wird die Schwingung bzw. die Bewegung bzw. der Druck im Inneren die Tendenz aufweisen, sich zu vergrößern auf ein Maß, das größer ist als in der Umgebung. Hinsichtlich der Kombinationsmöglichkeit mit Anspruch 6 oder 4 vgl. z. B. auch Fig. 31 und 32.
Fig. 50: Ein Weg zum Ausführen der Erfindung, insbesondere zur Demonstration von Anspruch 9. Ansicht bzw. Schnitt vertikal zur flächigen Ausdehnung des Gebildes. Die Linien im Bild symbolisieren Bauteile. Nicht ausgefüllte Flächen symbolisieren leere Räume. Die Anordnung ist hier links ähnlich der Anordnung von Fig. 31, rechts ergänzt mit einem herkömmlichen Gerät (99), das Anspruch 7 bzw. einen davon abhängigen Anspruch erfüllen kann. Bei den herkömmlichen Geräten (99) kann es sich z. B. um Strömungsmaschinen, wie z. B. Pumpen, Turbinen, Ventilatoren, Propeller, Laufräder oder Verdichtungseinrichtungen, oder auch um Schwingungsumwandler, wie z. B. Mikrofone, handeln. Im Fig. ist als Darstellung eine Art Laufrad, z. B. einer Turbine (99), gewählt, die um den Mittelpunkt (64) durch entsprechende Lagerung zirkulieren kann. Der Mittelpunkt (64) kann zweckmäßiger weise nach oben oder unten verschoben sein. Von besonderem Vorteil ist die Verlegung des Mittelpunktes (64) etwa in einer Linie mit dem oberen oder unteren Rand des links dargestellten Gebildes.
Fig. 51: Ein Weg zum Ausführen der Erfindung, verdeutlicht Kombinationsmöglichkeiten der Ansprüche. Ansicht bzw. Schnitt vertikal zur flächigen Ausdehnung des Gebildes, bzw. der Absorbnetze (01). Die Linien im Bild symbolisieren Bauteile. Nicht ausgefüllte Flächen symbolisieren leere Räume. Die Anordnung ist hier links ähnlich der Anordnung von Fig. 31, rechts ergänzt um ein Gebilde nach Anspruch 4, vgl. Fig. 18, 24, 38, 57, 58, 59. Rechts sind als Beispiel vier Absorbnetze (01) bzw. dessen Varianten an einem rotierbaren Gebilde (64), die um die Mitte von (64) rotierbar gelagert sind. In der linken Bildhälfte sind dagegen Absorbnetze (01) in einer relativ zum rotierbaren Gebilde (64) unbeweglichen, das heißt statischen Konstruktion, in mehrstufiger Ausführung, vgl. Anspruch 6, 4. Der Mittelpunkt (64) kann zweckmäßiger weise nach oben oder unten verschoben sein. Von besonderem Vorteil ist die Verlegung des Mittelpunktes (64) etwa in einer Linie mit dem oberen oder unteren Rand des links dargestellten Gebildes.
Fig. 52. Ein Weg zum Ausführen der Erfindung, besonders zum Ausformen von Anspruch 2. Durchgezogene Linien symbolisieren sichtbare Kanten. Unterbrochene Linien symbolisieren unsichtbare Kanten. Darstellung von Sperrelementen (a) z. B. durch Folienstreifen (02), hier in der Lage (b2) gezeigt. Links eine mögliche Vorderansicht, d. h. aus Blickrichtung der weniger durchlässigen Seite (d2). Rechts eine mögliche Seitenansicht, vgl. auch Fig. 1, 2, 3, 4, 5, 7, 14 für alternative Varianten bzw. Ansichten. Die Haltestruktur (c) ist in der linken Darstellung sieb-, gitter- bzw. netzförmig, Die Durchlässe bzw. Öffnungen (51) können andere Formen haben. Die undurchlässige Wandung (39) kann gegenüber den Öffnungen (51) stark reduziert sein, z. B. bis auf die Dicke eines Fadens oder Atomkette, z. B. Kohlenstoffkette. Die Fig. verdeutlicht auch, daß die Schwenkbarkeit (a1) der Sperrelemente (a) nicht nur durch die Größe der Durchlässe (51) der Haltestruktur (c) im Verhältnis zur Größe von Merkmal (a) sowie der Befestigung (b) der Sperrelemente (a) an oder vor der Haltestruktur (c), sondern auch durch die Sperrelemente (a) selber erfolgen kann, indem die Sperrelemente (a) z. B. in der Seitenansicht eine relativ große Länge erhalten und gleichzeitig so dicht stehen, daß sie nicht ohne weiteres ganz umfallen, je schweige denn auf die andere Seite (d1) können, wenn z. B. eine Strömung von der einen Seite (d2) auftritt, so daß die beweglichen Enden (19) selbst dann nicht auf die andere Seite (d1), gelangen können, wenn die Durchlässe (51) wesentlich größer als die Sperrelemente gestaltet werden. Aus Richtung (d1) ergibt sich z. B. eine ähnliche Ansicht, wie in der Vorderansicht von Fig. 37.
Fig 53. Ein Weg zum Ausführen der beanspruchten Erfindung, besonders zur Ausformung von Anspruch 2 oder 8, in einem stark vereinfachten Schema in einer Ansicht senkrecht zur flächigen Ausdehnung des Gebildes. Dabei besteht die untere Lage (53) des Gebildes z. B. aus einem tuch-, blech-, plattenartiges oder folienartigen Material, in das Muster eingebracht sind, z. B. eingeschnitten oder eingestanzt, so daß diese Lage (53), dem Merkmal (c) entsprechend, für ein bestimmtes Phänomen, z. B. für Teilchen bis zu einer bestimmten Größe, durchlässig wird. Auf dieses relativ unbewegliche Material (53) ist auf der einen Seite (14) in diesem Beispiel einseitig ein biegsames, flächiges Material (07) aufgebracht, in das ebenfalls Muster eingeschnitten sind. Die losen Enden (19) liegen in Fig. 53, im Gegensatz zu Fig. 02, Fig. 03 oder Fig. 13, an Merkmal (c, 53) an, das heißt diese liegen z. B. nahezu in ihren Einschnitten, nehmen mit anderen Worten die Lage (b1) ein. Die losen bzw. beweglichen bzw. Enden (19) können in Fig. 53 wegen ihrer Größe im Verhältnis zur Größe der Durchlässe (51) von (53) ihre Bewegungen bzw. Schwenkbarkeit (a1) nur auf der einen Seite (14) der Fläche ausführen bzw. haben. Das Gebilde (07) ist rechts und links im Bild an die Haltestruktur (c, 37, 53) befestigt. Die gestrichelten Linien sollen Durchlässe (51) symbolisieren.

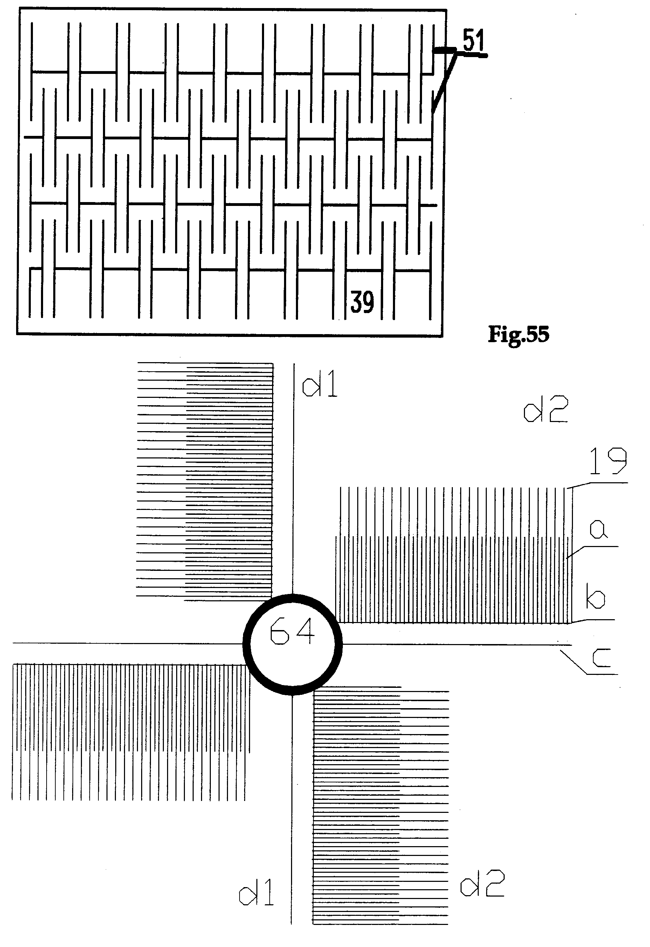

Fig. 54: Ausführen von Sperrelementen (a, 15) bzw. Haltestrukturen (c, 37), besonders zur Ausformung von Anspruch 2 oder 8. Zwei verschiedene Ausführungen von Sperrelementen (a), z. B. aus folienartigem Material, die mit bestimmten Mustern, verschiedenster Formen, eingeschnitten sind. Die Linien im Rahmen sind einige der möglichen Formen von Einschnitten und bilden damit, im Rahmen der Beweglichkeit bzw. Biegsamkeit der Folie, Öffnungen (51) in der ansonsten undurchlässigen Wandung (39). Als Schnittmuster eignen sich offene Muster wie h, H, <, >,T, M, N, V, W, + oder ähnlich, sowie Kombinationen aus verschiedenen Mustern insbesondere für Merkmal (a). Jedes der benannten Schnittmuster kann dabei als ein oder zwei Sperrelement (a, 15) bzw. freies Ende (19) aufgefaßt werden. Muster, die geschlossene Flächen haben, wie O oder D, sind für Haltestrukturen (c) besser geeignet, vgl. Fig. 8, 9, 10, 11, 12, 17, 19, 21, 23. In Fig. 20, 55 sind andere Varianten zu Anspruch 2.
Fig. 55: Ein Weg zum Ausführungen von Merkmal (a), besonders zu Anspruch 2 aus tuch- bzw. gewebeartigem Material, das mit bestimmten Mustern, verschiedenster Formen, eingeschnitten sein kann. Die Linien im Rahmen sind einige der möglichen Formen von Einschnitten und bilden damit, im Rahmen der Beweglichkeit des Materials, Öffnungen (51) in der ansonsten undurchlässigen Wandung (39). Als Schnitttmuster eignen sich offene Muster wie h, H, <, >, T, _, M, N, V, W, + oder ähnlich, sowie Kombinationen aus verschiedenen Mustern besonders für Merkmal (a). Muster die geschlossene Flächen, haben wie O oder D, sind für Merkmal (c) besser geeignet. Siehe Fig. 08, 09, 10, 11, 12, 17, 20 und 54 wegen weiterer Ausführungen, unter anderem zu Anspruch 2, und analog beschriebenes.
Fig. 57 zeigt die Ausführung einer Anwendung der Erfindung, insbesondere zur Verdeutlichung von Anspruch 4. Ansicht senkrecht zur flächigen Ausdehnung der Bauteile. Absorbnetze (01) sind dabei an einem beweglichen Gebilde, das in diesem Fall drehbar gelagert ist. In der Mitte ist z. B. eine Achse bzw. Welle (64) oder ein Mast (64), um dessen Mittelpunkt (64) das Gebilde drehbar gelagert ist. An diesem Rotationskörper (64) sind z. B. vier Absorbnetze (01) angebracht. Diese vier flügelartigen Gebilde bestehen z. B. jeweils aus einer gitterartigen Konstruktion als Haltestuktur (c) bzw. (37) vor oder auf deren einer Seite Sperrelemente (a) bzw. (15) sind. Merkmale (a) aller flügelartiger Flächen sind jeweils auf der entgegen dem Urzeigersinn gerichteten Seite angebracht. Alternativ können Merkmale (a) aller flügelartiger Flächen auch jeweils auf der im Urzeigersinn gerichteten Seite angebracht sein. Die Haltestruktur (c, 37) kann entsprechend dieser Darstellung aus sprossenartig an der Drehachse befestigten, stab- oder röhrenähnlichen Gebilden realisiert werden, die an dem der Achse (64) entgegengesetzten Seite aus Stabilitätsgründen durch ein Gestänge miteinander verbunden sein können. Die Sperrelemente (04) sind z. B. faden- bis seilähnliche Gebilde, die jeweils oben und unten an jedem flügelartigen Gebilde befestigt (16) sein können. Vgl. Fig. 28 für die perspektivische Ansicht einer der vier Flächen. Merkmal (b) ist z. B. realisiert, indem sprossenartige Gebilde von Merkmal (c) horizontal verlaufen, während Merkmal (a, 15, 04) vertikal angeordnet ist. Die Zahl der segel- bzw. flügelartigen Gebilde kann zwei und mehr betragen. Diese Flügel können ebene oder gekrümmte Flächen beschreiben, vorzugsweise auch den dargestellten Querschnitt in jeder Ebene beibehaltend schrauben- oder federschraubenförmig um die Drehachse (64) gewunden sein, wobei dann auch ein Flügel reichen kann, um einen Selbstanlauf in einer starken Strömung zu erreichen. Bei nur einem Flügel sollte dieser mindestens eine Windung um die Welle (64) über die Höhe der Welle aufweisen. Möglichst viele Windungen sind für eine geringe Unwucht erwünscht. Mehrere dieser Gebilde können gegenläufig verzahnt angeordnet sein, vgl. Fig. 46. Der Mast bzw. die Welle (64) oder Achse (64) kann eine Kraft bzw. ein Drehmoment auf einen angekoppelten Ventilator, Pumpe, Generator, Verdichter oder ähnlichem übertragen, wenn, bevorzugt aus einer aber beliebigen Richtung kommend, schwingend bis strömend sich bewegende Teilchen vorhanden sind, für die die flügelartigen Gebilde entsprechend Merkmal (d) nur bedingt durchlässig sind. Das Gebilde kann horizontal, vertikal oder dazwischen angeordnet werden. Der Rotationskörper (64) kann z. B. in Form eines zylindrischen Körpers aus einem Gitter bestehen, um Material zu sparen. Um das Drehmoment des Gerätes zu erhöhen ist es zweckmäßig den Durchmesser des Rotationskörpers (64) groß zu gestalten, so daß die flügelartigen Gebilde weiter vom Drehpunkt zu liegen kommen. Die Konstruktion kann auf einen Unterteller vgl. Fig. 58 montiert werden mit den dort genannten analogen Möglichkeiten. Die Größenverhältnisse der Komponeten untereinander können anders als dargestellt sein.
Fig. 58 zeigt die Ausführung einer Anwendung der Erfindung als Draufsicht bzw. Ansicht von unten bzw. als Querschnitt bzw. senkrecht zur flächigen Ausdehnung des Absorbnetzes (01). Vgl. dazu Fig. 59 für eine mögliche perspektivische Darstellung. Die gekrümmte Linie um den Mittelpunkt wird dabei ganz oder teilweise durch eine Einrichtung nach Anspruch 1 oder einem abhängigen Anspruch, als Absorbnetz (01) bezeichnet, ersetzt. Soweit das Absorbnetz (01) von sich aus nicht so stabil ist oder hergestellt werden kann, die gewünschte Form zu halten, wird es durch entsprechende Verstrebungen verstärkt. Vorzugsweise wird nur die äußerste Windung durch ein Absorbnetz (01) ersetzt. Die gekrümmte Linie beschreibt in der Darstellung eine Kreisvolvente oder ähnliches spiralförmiges Gebilde. Das spiralförmige Gebilde kann fünf Windungen, wie in der Darstellung, aber auch mehr oder weniger Windungen aufweisen. Die Windungen können auch als hyperbolische oder logarithmische Spirale ausgeführt werden. An die gekrümmte Linie sind als Konstruktionshilfe Tangenten eingetragen. Durch den Schnittpunkt der Tangenten mit der gekrümmten Linie sind lotrechte Linien zur Tangente eingezeichnet, die im Inneren die Tangenten von Kreisen ergeben. Um einen Punkt innerhalb dieser Kreise, dem Drehpunkt, vorzugsweise dem Mittelpunkt der Kreise, wird das spiralförmige Gebilde vorzugsweise drehbar gelagert werden. Die Drehachse ist dabei bevorzugt senkrecht zu der dargestellten Ebene, bei Verwendung des drehbaren Gebildes kann sie u. a. horizontal oder vertikal sein. Mehre Körper, mit Querschritten wie dargestellt, können übereinander geschichtet und aneinander befestigt werden, wobei diese eine gemeinsame Drehachse durch den jeweiligen Drehpunkt haben, jedoch jeweils um einen bestimmten Drehwinkel gegeneinander verdreht zusammen gefügt werden. Letzteres kann zu schraubenartigen vertikalen Windungen führen, die die dargestellten horizontalen Windungen ergänzen bzw. überlagern. Dadurch wird beim beabsichtigten Drehen die Unwucht klein. Unter dem spiralförmigen Gebilde kann eine Platte, vorzugsweise eine kreisförmige Platte angebracht werden, auch als Unterteller bezeichnet, wodurch am Drehpunkt des Gebildes eine drehbar gelagerte Befestigung an die Umgebung, z. B. dem Boden, möglich wird. Alternativ oder zusätzlich kann auf dem spiralförmigen Gebilde eine ähnliche Platte angebracht werden, wodurch am obersten Drehpunkt des Gebildes eine drehbar gelagerte Befestigung mit der Umgebung möglich wird. Wird ein solches Gebilde einer starken Strömung ausgesetzt, so führt es, je nach Ausrichtung, eine nutzbare Drehung aus, besonders wenn das Gebilde z. B. manuell in eine schnelle Drehung versetzt wird. Dabei ist die undurchlässige Seite (14) des Absorptionsnetzes (01) vorzugsweise außen. Die Sperrelemente (15) des Absorptionsnetzes (01) bzw. der Abstand der Windungen sind dabei so bemessen, daß die losen Enden (19) die nächste Windung kaum, vorzugsweise nicht, berühren. Das Verhältnis von Höhe des spiralförmigen Gebildes zu dessen Breite kann anders als in der Darstellung gewählt werden. Der Unterteller kann auch die Form eines Kegels bekommen, auf den ein Gebilde mit dem dargestellten spiralartigen Querschnitt aufgesetzt wird. Unter dem Unterteller kann h ein Fundament sein, das dem Unterteller angeformt bzw. damit formschlüssig ist. Zwischen Unterteller und Fundament können Laufräder für eine entsprechende gleitende Verbindung sorgen. Diese Laufräder können radial verschiebbar angebracht werden, um die Drehzahl der Maschinen zu regeln, vorzugsweise ausgeführt in der Art eines Reibradgetriebes. Vorzugsweise treiben einige oder alle Laufräder Generatoren, Pumpen, Verdichter, Ventilatoren oder sonstige Maschinen. Vorzugsweise werden drei Laufräder oder mehr eingesetzt. Die Laufräder werden vorzugsweise am Unterteller oder am Fundament mit Achsaufhängungen befestigt.
Fig. 59 zeigt die Ausführung einer Anwendung der Erfindung perspektivisch, besonders die Gestaltung gekrümmter Flächen vgl. Anspruch 8. Vgl. Fig. 58 für mögliche Ansichten von Unten, Oben, der Seite oder im Querschnitt.
Legende zu den Fig.:

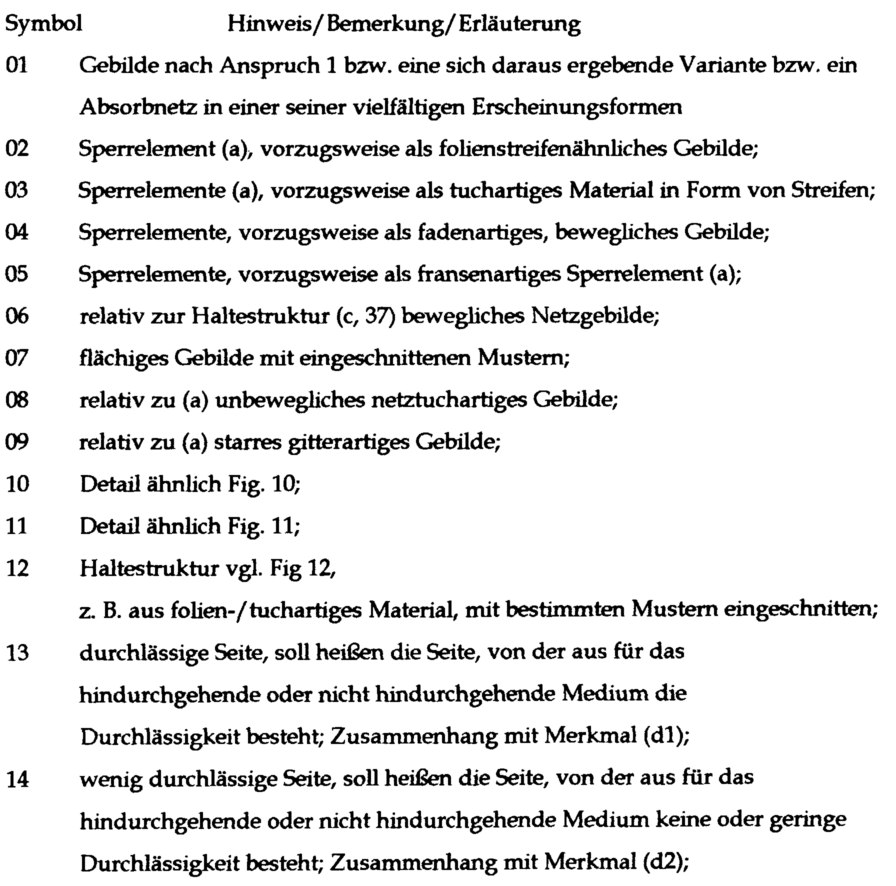

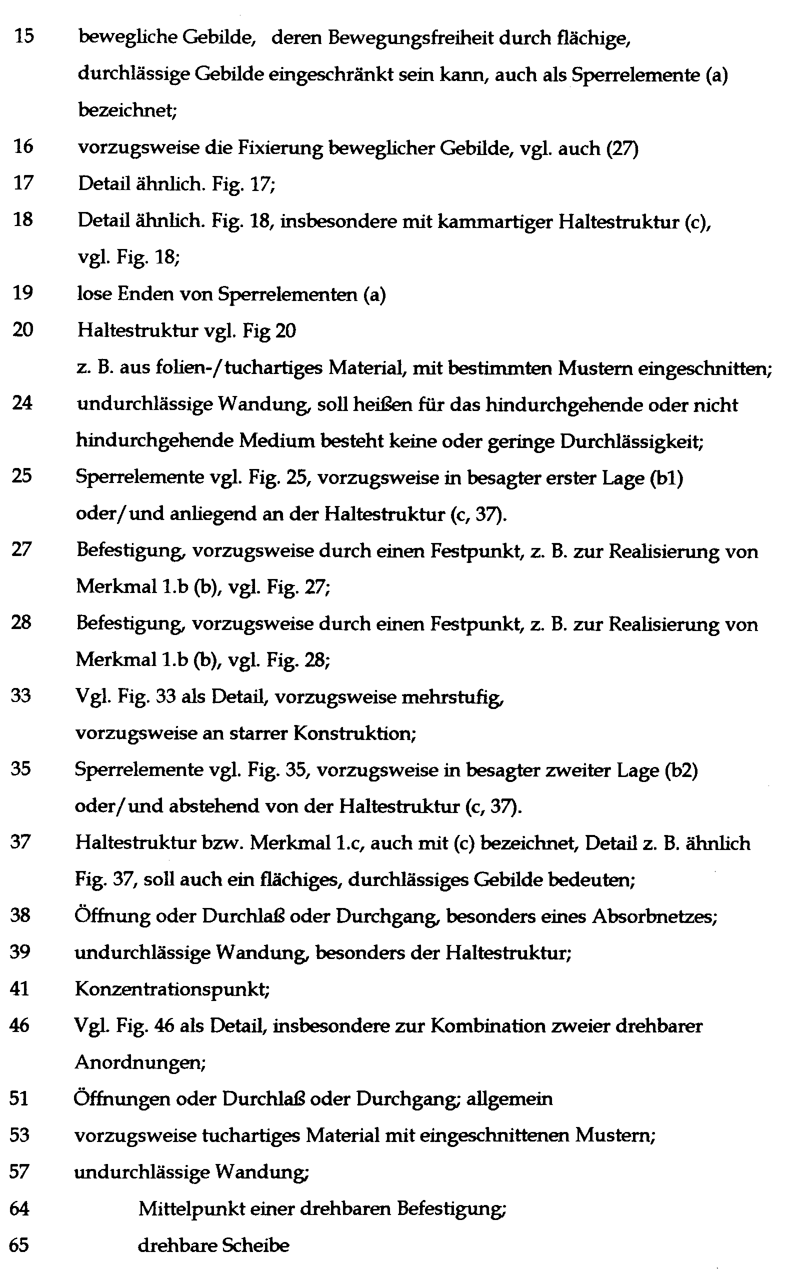

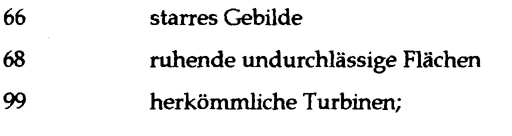

Vorteilhafte Wege zur Ausführung der Erfindung sind in Patentanspruch 1 bis 10 angegeben. Weitere vorteilhafte Ausgestaltungen ergeben sich aus Kombinationen der Patentansprüche und Teile davon miteinander, der Beschreibung, den Darstellungen, sowie den folgenden Abwandlungen.

Anspruch 1 bzw. Varianten, wobei diese Gebilde ganz oder teilweise einen Raum umschließen, wobei die weniger durchlässige Seite (d2) oder die durchlässigere Seite (d1) zu dem Raum zeigt, wobei vorzugsweise die Durchlässigkeit der weniger durchlässigen Seite (d2) durch einen Steuerungsmechanismus (37), vgl. Fig. 39, erhöht oder gemindert werden kann.

Anspruch 8 bzw. Varianten, wobei ein Flächengebilde, z. B. eine Folie, Blech, Platten oder Tuch, mit Mustern eingeschnitten wird, so daß diese ähnl. Fig. 9, 10, 11, 12, 17, 20, 23, 37, 53, 54, 55 ausgeführt sind.

Anspruch 8 bzw. Varianten, wobei die Haltestruktur (c) aus nebeneinander, in einer Ebene, angeordneten Gebilden besteht, wobei die nebeneinander, in einer Ebene, angeordneten Gebilde bevorzugt als faden- oder streifen- oder seil- oder draht- oder kettenartige Gebilde realisiert werden, wobei die Streifen auch aus tuch- und/oder folien-. und/oder blechartigem Material bestehen können, vgl. Fig. 4, 34.

Anspruch 2 bzw. Varianten, wobei entsprechende Befestigungen ungelenkig, z. B. durch Klebe- oder Schweißverbindung, oder gelenkig, z. B. durch Knoten, Verbindung über Ringe, Schaniere oder Ösen, ausgeführt sein können.

Anspruch 2 bzw. Varianten, wobei entsprechende Befestigungen in jeweils in ein- oder mehrfacher, punktförmiger weise und/oder entlang einer Fläche, z. B. durch Kleber, und/oder entlang mehrerer Flächen bestehen. Die Befestigung kann auch entlang einer, vgl. Fig. 52, oder mehrerer Linien, z. B. durch eine oder mehrere Nahten, oder/und durch räumliche Gebilde, z. B. Schrauben oder Nieten realisiert werden. Vgl. Fig. 53, 54, 55, 20.
Für Anspruch 4 bzw. Varianten vgl. Fig. 45, 46, 58, 59.

Die Erfindung kann z. B. als Segel verwendet werden, das bei plötzlich auftretendem Gegenwind keinen nennenswerten Rückschub auslöst und damit z. B. einen Surfer, der mit Rückschub nicht rechnet, vom Brett reißt. Ähnliches gilt für Segelschiffe und andere Geräte, die von Strömungen oder von sich ausbreitenden Schwingungen angetrieben werden. Beim Tier- und Objektfang kann mit der Einrichtung besonders Objekte, die kleiner als die Öffnungsweite des netz- oder kammartigen Struktur sind, gesammelt bzw. in eine bestimmbare Richtung geleitet werden. Die Objektgröße kann auch bis in Größe chemischer Elemente und Teile davon, z. B. Ionen, Elektronen, Photonen, reichen. Die Erfindung läßt sich zur Beeinflußung oder Ausnutzung gasförmiger Medien, wie z. B. Luft oder Luftströmungen nutzen, wenn die Durchlässe (38, 51) für entsprechende gasförmige Medien,z. B. für Luft oder Luftströmungen, durchlässig gestaltet werden, ebenso läßt sie sich für flüssige Medien, z. B. Wasser oder Wasserströmungen nutzen, wenn die Durchlässe (38, 51) für entsprechende flüssige Medien, z. B. für Wasser oder Wasserströmungen, durchlässig gestaltet sind, ebenso läßt sich die Erfindung zum Beeinflussen, Erzeugen oder Ausnutzen von sonstige Strömungen nutzen, wenn die Durchlässe (38, 51, d) für entsprechende Strömungen durchlässig gestaltet werden. Die Erfindung ist direkt und indirekt über deren Verwendung in den angegebenen Konstruktionen, vgl. z. B. Fig. 32, 33, 36, 48, 49, 50 oder 51, verwendbar zum Sammeln von Energie, z. B. von Energien die in Schwingungen oder Strömungen vorhanden sind. Die Erfindung ist direkt und indirekt über deren Verwendung in den angegebenen Konstruktionen, vgl. z. B. Fig. 18, 24, 38, 44, 45, 46, 47, 50, 57 oder 51, verwendbar zum Umformen von Energie oder Energiezuständen in andere Energiearten bzw. -zuständen, z. B. von Energien, die in Schwingungen, Strahlungen oder Strömungen vorhanden sind, z. B. in eine mechanische Energie, ausgedrückt in einer Drehbewegung. Die Erfindung ist anwendbar zum Umformen des Energiezustandes von Teilchen, z. B. die Teilchen eines Gases wie der Luft, für die die Durchlässe (38, 51, c2, d1) durchlässig sind und deren Energiezustand im Verhältnis zum Energiezustand des Absorbnetzes groß genug ist die losen Enden (19) zu bewegen. Sind solche Teilen ürsprünglich in einem Energiezustand der Ruhe, so lassen sich die Teilen z. B. durch ein Hin- und Herbewegen oder durch kreisende Bewegung der Erfindung in Bewegung versetzen, die eine bestimmte dominierende Richtung haben kann und damit z. B. als Strömung oder Schwingung wahrgenommen werden kann. Waren Teilchen eines Medium z. B. in einer ungeordneten Bewegung die sich in der Summe aller Teilchen aufhebt bzw. eine bestimmte Richtung hatte, so läßt sich der ungeordneten Bewegung eine geordnetere, resultierende Grundbewegung bzw. eine andere als die vorherige Richtung überlagern. Was auf Teilchen, wie Ionen oder Moleküle, zutrifft, trifft im entsprechenden Größenverhältnis auch auf größere Objekte, z. B. Vögel, Fische, Treibgut oder Sandkörner, zu. Die Erfindung ist anwendbar zur Umformung von Energie bzw. Schwingungs- bzw. Bewegungs- bzw. Strömungszuständen, wobei z. B. die Energieart in eine andere Energieart und/oder eine Richtung einer Bewegung oder Schwingung in eine andere Richtung der Bewegung oder Schwingung, insbesondere in Form einer Umlenkung, überführt werden kann. Entsprechend kann auch eine Geschwindigkeit einer Bewegung, Schwingung oder Strömung geändert werden. Energie steht dabei z. B. auch für Bewegungsenergie. Die Erfindung kann verwendet werden, die zuvor beschriebenen vorteilhaften Wirkungen zu erzielen.

## Patentansprüche

1. Einrichtung mit mehr als vier Sperrelementen (a, 04, 15) und wenigstens einer gitter- oder kammartigen Haltestruktur (c, 37), wobei die Haltestruktur mehr als vier Durchlässe (c2, 38) aufweist, wobei die Sperrelemente nur auf einer Seite (d2, 14) an der Haltestruktur angeordnet sind, wobei die Sperrelemente in mindestens einen oder aus mindestens einem Bereich der Durchlässe (38, d2) schwenkbar (19) sind, wobei die Sperrelemente in einer ersten Lage (b1, 25) die Durchlässe wenigstens teilweise abdecken und in einer zweiten Lage (b2, 35) wenigstens teilweise freigeben, wobei die Schwenkbarkeit (a1, 19) durch die gitter- bzw. kammartige Haltestruktur (c, 37) überwiegend auf die eine Seite (d2, 14) der Haltestruktur beschränkt wird (b), wobei kein motorischer oder manueller Antieb unmittelbar (19), sondern allenfalls mittelbar (16) wenigstens ein motorischer oder manueller Antrieb an den Sperrelementen angebracht ist, wobei die Einrichtung vorzugsweise zur Ausnutzung ihrer bedingten Durchlässigkeit (d) verwendet wird, wobei die Einrichtung weder als Perücke noch als Kunstrasen verwendet wird, wobei diese bedingte Durchlässigkeit darin besteht, daß eine Seite der Fläche (c1) der Haltekonstruktion leichter durchlässig (d1, 13) ist als die andere Seite (d2, 14), wobei die vier Sperrelemente (a) vorzugsweise aus weinigstens einem wabenartigen Körper mit mehr als vier Waben bestehen können.

2. Anspruch 1 oder/und Kombinationen mit Teilen davon abhängiger Ansprüche, wobei alle Sperrelemente (a, 04, 15) vorzugsweise durch wenigsten ein flächiges Gebilde mit eingebrachten oder eingeschnitten Mustern (07) oder durch wenigsten ein waben- oder netzartiges oder durch mehr als vier faden- (04) oder fransen- (05) oder streifenartige (02, 03) Gebilde gebildet werden können, wobei besagte streifenartige Gebilde (02, 03) vorzugsweise aus gewebe- oder netz- oder tuch- (03) oder netztuch- oder folienartigem (02) Material bestehen, wobei besagte Sperrelemente (a, 15) vorzugsweise wenigstens einen schwenkbaren Teil (19) aufweisen, wobei die Sperrelemente (a, 15) vorzugsweise kaum oder garnicht durch die Durchlässe (c2, 38) der Haltestruktur gelangen, wobei besagte schwenkbare Teile (19) vorzugsweise eine nicht oder kaum durch die Durchlässe (c2, 38) der Haltestruktur passende Form aufweisen, wobei besagte Form vorzugsweise durch wenigstens ein größeres Maß als die Durchlässe (c2, 38) der Haltestruktur (c, 37) gekennzeichnet ist, wobei die schwenkbaren Teile (19) vorzugsweise durch ihre Biegsamkeit oder/und durch. Gelenke eine Schwenkbarkeit (a1) aufweisen können, wobei besagte schwenkbare Teile (19) der Sperrelemente (a) vorzugsweise überwiegend in der besagten ersten (b1, 25) oder zweiten Lage (b2, 35) sind, wobei die erste Lage (b1, 25) vorzugsweise durch an der Haltestruktur (c) anliegende Sperrelemente (a, 15) gebildet ist, während die zweite Lage (b2, 35) vorzugsweise durch von der Haltestruktur (c, 37) abstehende Sperrelemente (a, 15) gebildet ist, wobei die fransen- (05) oder faden- (04) oder streifenartigen (03, 02) Gebilde bevorzugt mehr oder weniger diagonal und/oder mehr oder weniger horizontal und/oder mehr oder weniger vertikal angeordnet sind, wobei besagtes flächiges Gebilde mit eingebrachten oder eingeschnittenen Mustern (07) vorzugsweise durch folien- oder tuchartiges Material (20) realisiert werden kann, wobei die Sperrelemente (a) vorzugsweise überwiegend oder ausschließlich auf der weniger durchlässigen Seite (d2, 14) angeordnet werden können, wobei diese Anordung vorzugsweise durch wenigstens eine Befestigung erfolgen kann, wobei eine Befestigung (16, 27) jeweils vorzugsweise vor oder/und an der Haltestruktur (c, 37) erfolgen kann, wobei eine Befestigung (16) jeweils vorzugsweise in nahezu punkt- (27) oder/und linienförmiger weise erfolgen kann.

3. Einrichtung nach Anspruch 1 und/oder Kombinationen mit Teilen davon abhängiger Ansprüche, wobei vorzugsweise durch einen Steuerungsmechanismus die Durchlässigkeit der leichter durchlässigen Seite (d1, 13) oder/und der weniger durchlässigen Seite (d2, 14) oder/und der Durchlässe der Haltestruktur (c, 37) gemindert oder erhöht bzw. geändert werden kann, wobei die Einrichtung vorzugsweise bewegt oder nicht bewegt bzw. statisch gehalten wird.

4. Einrichtungen nach Anspruch 1 und/oder Kombinationen mit Teilen davon abhängiger Ansprüche, wobei diese Einrichtungen vorzugsweise wenigstens an einer starren (66) oder/und beweglichen Konstruktion, vorzugsweise einoder mehrstufig, angebracht sind, wobei die beweglichen Konstruktionen vorzugsweise Drehungen oder/und Schwingungen oder/und Vibrationen ausführen oder/und drehbar oder/und hin- und/oder herbeweglich gelagert sein können, wobei besagte bewegliche Konstruktionen vorzugsweise durch drehbar gelagerte Masten (64) oder Achsen (64) oder Wellen (64) realisiert werden können, wobei diese Masten (64) oder Achsen (64) oder Wellen (64) vorzugsweise horizonal oder/und vertikal eingesetzt sein können, wobei besagte bewegliche Konstruktionen vorzugsweise motorisch oder/und manuell angetrieben oder/und Maschinen antreibend sein können.

5. Anspruch 1 oder/und Kombinationen mit Teilen davon abhängiger Ansprüche, wobei die Einrichtung (01) auf der weniger durchlässigen Seite (d2, 14) und/oder auf der durchlässigeren Seite (d1, 13) vorzugsweise mit wenigstens einer gitter- oder kammartigen Steuerfläche kombiniert wird, wobei besagte Steuerfläche vorzugsweise Durchlässe (51) bzw. Öffnungen (51) hat.

6. Anspruch 1 oder/und Kombinationen mit Teilen davon abhängiger Ansprüche, wobei wenigstens eine besagte Einrichtung vorzugsweise ganz oder teilweise wenigstens einen Raum, vorzugsweise ein- oder mehrstufig, abtrennen oder umschließen kann, wobei vorzugsweise die leichter durchlässige Seite (d1, 13) oder die schwerer durchlässige Seite (d2, 14) dem jeweiligen Raum zugewandt sein kann, wobei die leichter durchlässige Seite (d1, 13) oder/und die schwerer durchlässige Seite (d2, 14) ohne oder mit wenigsten einem Steuerungsmechanismus ausgerüstet ist, wobei mit besagtem Steuerungsmechanismus vorzugsweise die Durchlässigkeit verändert, vorzugsweise erhöht oder gemindert, wird.

7. Einrichtung nach Anspruch 1 oder/und Kombinationen der abhängigen Ansprüche, wobei entsprechende Einrichtungen insbesondere zum Sammeln oder/und Umformen von Energie und/oder Energie und/oder Schwingungs- oder/und Bewegungszuständen verwendet werden.

8. Anspruch 1 oder/und Kombinationen mit Teilen davon abhängiger Ansprüche, wobei die Haltestruktur (c, 37) vorzugsweise durch Abstände zwischen mehr oder weniger undurchlässige Elementen oder durch wenigstens ein flächiges Gebilde, vorzugsweise aus blech- oder platten- oder tuch- oder folienartigem Material, mit eingeschnitten Mustern (12) oder durch wenigstens ein Flächengebilde mit Öffnungen (38) oder durch nebeneinander, mehr oder weniger in einer Ebene, angeordnete Gebilde (18) gebildet werden kann, wobei jedes Flächengebilde vorzugsweise aus netztuch- oder rost- oder gitter- oder siebartige Gebilde bestehen kann, wobei die Fläche (c1) vorzugsweise durch wenigstens eine ebene und/oder gekrümmte Fläche gebildet werden kann, wobei die Dicke der Haltestruktur zwischen der durchlässigeren Seite (d1, 13) und der undurchlässigeren Seite (d2, 14) vorzugsweise auf das für die Stabilität erforderliche Maß reduziert sein kann, wobei besagte angeordnete Gebilde (18) bevorzugt durch zylindrische oder faden- oder streifen- oder seil- oder draht- oder ketten- oder rohr- oder stabartige Gebilde realisiert werden, wobei besagte streifenartigen Gebilde vorzugsweise aus tuch- und/oder folien-. und/oder blechartigem Material bestehen können, wobei besagte Haltestruktur (c, 37) vorzugsweise unbeweglich in Bezug auf die Sperrelemente (a, 15) ist, wobei besagtes Flächengebilde vorzugsweise durch wenigstens ein für sich flexibles Gebilde realisiert werden, wobei ein flexibles Gebilde vorzugsweise durch Kräfte gespannt wird, wobei ein flexibles Gebilde vorzugsweise durch netztuchartiges Material und/oder durch wenigstens einen wabenartigen Körper, realisiert wird, wobei ein wabenartiger Körper vorzugsweise ein einseitig (d1, 13) starrer Körper ist, wobei ein einseitig (d1, 13) starrer Körper vorzugsweise durch Verdickungen gebildet ist, wobei ein flexibles Gebilde vorzugsweise durch Kräfte einseitig (d1, 13) stramm gespannt oder durch Verdickungen starr gestaltet werden kann, wobei besagte Kräfte vorzugsweise Flieh- und/oder Gewichts- und/oder Spannkräfte sind, wobei besagte Spannkräfte vorzugsweise durch wenigstens eine stramme Fixierung eines flexiblen Gebildes erreicht wird, wobei besagte Fixierung vorzugsweise in wenigstens einem rahmenartigen Gebilde und/oder durch zwei oder mehr stabartige Gebilde erfolgt

9. Anspruch 1 oder/und Kombinationen mit Teilen davon abhängiger Ansprüche, wobei diese Gebilde mit herkömmlichen Geräten (99) kombiniert werden, wobie die herkömmlichen Geräte (99) vorzugsweise Anspruch 7 und/oder Kombinationen der davon abhängigen Ansprüche erfüllen können.

10. Anordnung nach Anspruch 1 und/oder Kombinationen mit Teilen davon abhängiger Ansprüche, wobei mehrere dieser Anordnungen miteinander (46) und/oder mit wenigsten einem statischen Gebilde (68) kombiniert werden.
